# FASCICULE DE BREVET EUROPEEN

(11) **EP 1 193 013 B1**
(45) Date de publication et mention de la délivrance du brevet: **23.04.2003**
(21) Numéro de dépôt: 99916934.5
(22) Date de dépôt: 05.05.1999
(51) Int. Cl.: B23B 41/00

(54) **MACHINE SERVANT A PERCER DES TROUS DE GRAISSAGE DANS DES VILEBREQUINS ET PROCEDE CORRESPONDANT**
MASCHINE ZUM BOHREN VON ÖLLÖCHERN IN KURBELWELLEN UND DESSEN METHODE
MACHINE FOR DRILLING OIL HOLES IN CRANKSHAFTS AND CORRESPONDING METHOD

(30) Priorité: 19.04.1999 ES 9900797
(43) Date de publication de la demande: 03.04.2002
(73) Titulaire: Etxe-Tar, S.A., 20870 Elgoibar (ES)
(72) Inventeur: GORROCHATEGUI SALABERRIA, Gorka, E-20870 Elgoibar (ES)
(74) Mandataire: Urizar Barandiaran, Miguel Angel
(86) Numéro de dépôt international: ES9900121
(87) Numéro de publication internationale: WO00062963

(56) Documents cités:
- PATENT ABSTRACTS OF JAPAN & JP 59 232 707 A (HONDA MOTOR CO.) 27 December 1984
- PATENT ABSTRACTS OF JAPAN & JP 62 019 308 A (HONDA MOTOR CO.) 28 January 1987
- PATENT ABSTRACTS OF JAPAN & JP 07 060 517 A (SEKISUI CHEM CO LTD.) 07 March 1995
- PATENT ABSTRACTS OF JAPAN & JP 61 236 464 A (MAZDA MOTOR CORP.) 21 October 1986

## Description

L'objet de l'invention est une machine et un processus comme définis dans les revendications 1 et 15, respectivement, notamment souples et permettant de percer des tous de graissage dans des positions diverses et dans une gamme variée de types de vilebrequins, en production moyenne ou élevée, pour des moteurs à combustion (automobiles, ...).

Les trous de graissage d'un vilebrequin peuvent être situés d'une façon variée sur toute la longueur et la largeur de son axe longitudinal. Ils peuvent également être situés dans différentes positions autour de la circonférence qu'il décrit en tournant sur cet axe longitudinal et ils peuvent aussi être perpendiculaires ou avoir divers angles d'inclinaison par rapport à l'axe longitudinal cité du vilebrequin.

Tant que l'industrie automobile n'a pas fait preuve d'inquiétude au sujet de l'idée de flexibilité, l'usinage décrit a été abordé avec des machines-transferts (chaînes ayant plusieurs stations), chaque station perçant l'un des différents trous. Cette solution a été valable à des époques où les changements dans les dimensions et les formes géométriques des vilebrequins étaient faibles, lorsqu'un moteur automobile avait une longue durée de vie assurée sur le marché. Mais, à présent que les changements sont fréquents, la machine et le processus doivent être souples pour s'adapter à des vilebrequins ayant des différences dimensionnelles et géométriques, ainsi que des variations dans la position/inclinaison des trous de graissage et également, dans le nombre de ces trous. Une telle adaptation doit être rapide, commode et peu coûteuse, du fait de la fréquence avec laquelle elle se présente.

Il existe également un autre facteur qui a varié ces derniers temps: quand un nouveau modèle de moteur automobile est lancé sur le marché, il y a des incertitudes croissantes sur la demande qu'il captera et tout calcul initial peut être erroné, que ce soit à la hausse comme à la baisse. C'est pourquoi les fabricants d'automobiles préfèrent aujourd'hui des moyens de production qui permettent des débuts avec un faible investissement et une production basse et, ensuite, si le marché répond de façon positive, avec une demande croissante, ajouter de nouvelles unités de production identiques aux initiales. Si la première moitié leur sert pour une production allant jusqu'à 50.000 pièces/an, ils auront besoin d'ajouter une nouvelle unité, lorsque se présentera la demande d'une production atteignant 100.000/an et une troisième, si elle augmente encore plus, et ainsi de suite.

On ne peut affronter ces facteurs émergents avec des machines-tranferts à plusieurs stations, parce qu'elles sont peu souples et, en outre, elle ne permettent pas un investissement progressif, parallèle à la production en escalade du fait d'une demande croissante, car ce sont des machines liées à un gros investissement et à une production élevée, dès le début.

La grande variabilité de position des trous de graissage, comme elle a été décrite précédemment, ne peut pas être obtenue non plus dans les centres classiques d'usinage, avec les trois axes X, Y, Z, du moins à moyenne-haute production. Et, de surcroît, il se présenterait le problème de l'axe additionnel W, qu'il faut pour positionner indépendamment les douilles de guidage de la mèche, car un tel 4^{e} axe n'existe pas dans les centres classiques d'usinage. Et il n'existe pas non plus de disposition spéciale permettant d'effectuer parfois le changement automatique de la mèche + sa douille de guidage correspondante et que, d'autres fois, seule la douille de guidage soit changée, parce que la mèche sert au perçage suivant; en revanche, il faut changer la douille parce qu'il faut une géométrie différente à son extrémité antérieure, afin de l'adapter à la géométrie de la zone du vilebrequin sur laquelle elle prend appui.

Pour toute ce qui est indiqué, il existe la nécessité d'avoir une machine pour le perçage des trous de graissage dans des positions variées et dans une gamme de types-variés de vilebrequins, qui ait pour caractéristique la souplesse et, également, qu'il s'agisse d'une unité de production permettant son inclusion dans une chaîne, en nombre croissant, à fur et à mesure que la production requise augmente.

Auparavant, il y a eu une tentative pour atteindre cet objectif si ambitieux, mais elle n'a pas donné les résultats escomptés, car elle comporte des inconvénients notables qui, dans une production moyenne-élevée deviennent très gênants pour une industrie aussi exigeante que celle de l'automobile. Certains des inconvénients de ce que l'on connaît de la tentative précédente, que, pour des raisons de simplification, on indiquera sous la clef "I A" (US-A-5.759.140), selon le préambule de la première revendication, sont cités ci-dessous:

a).- La machine doit pouvoir fonctionner aussi bien avec des mèches canons, qui comportent un ramasseur des tournures produites lors du perçage, que des mèches conventionnelles, avec lesquelles il n'y a pas de ramasseur, c'est pourquoi les tournures s'éparpillent dans la zone de travail. La 2^{e} alternative exige que la disposition de la zone de travail ne permette pas la retenue des tournures sur les outils porte-vilebrequins et sur les mécanismes avoisinants, étant indispensable que les tournures soient évacuées en chute libre, à travers des zones dégagées et sans aucun obstacle.

Sur la machine "I A", les vilebrequins sont fixés dans un bâti rectangulaire en forme de caisse, presque fermé d'un côté et, de l'autre, avec une ouverture pour pouvoir charger-décharger les vilebrequins. Ce bâti-caisse pivote sur un axe horizontal soutenu par deux paliers, l'un en face de l'autre. Le pivotement a pour but que les axes longitudinaux des vilebrequins, situés dans le bâti-caisse, prennent des positions variées:
1^{e} position: horizontale pendant le chargement-déchargement des vilebrequins.
2^{e} position: verticale, au moment de percer les trous perpendiculaires à l'axe longitudinal des vilebrequins.
3^{e} position: inclinée ascendante, au moment de percer les trous inclinés par rapport à cet axe longitudinal des vilebrequins.
4^{e} position: inclinée descendante au moment de percer les trous ayant une inclinaison inverse à la précédente.

Le bâti-caisse est presque fermé d'un côté et, en outre, reçoit les vilebrequins, également les outils de postionnement et de fixation, ainsi que les mécanismes de rotation des vilebrequins sur leur axe longitudinal et d'autres mécanismes nécessaires, tuyauteries, etc. Tous ces éléments sont entassés dans le bâti-caisse. Et, dans les 3^{e} et 4^{e} positions, qui sont inclinées, les tournures des perçages avec une mèche conventionnelle tombent directement et à profusion sur le bâti-caisse et tous les mécanisme qu'il contient, et, comme il n'y a pas de chute libre, les tournures s'amoncellent dessus, dans les fentes et là où elles peuvent trouver une place. Cet inconvénient est grave et, lors des chargements-déchargements suivants de vilebrequins, la gêne due aux tournures donnera lieu à des dysfonctionnements qui sont inadmissibles dans une production moyenne-élevée.

Dans le résumé de l'invention qui est présenté plus loin, au point al), on décrira une disposition totalement différente de celle de "IA", le mode dont on évite les inconvénients de I"'I A" et le caractère incomparable dans la disposition comme dans les résultats, entre "I A" et l'invention, aussi bien pour ce point que pour ceux qui sont décrits ci-dessous.

b).- Le problème des tournures qui sont éparpillées dans la zone de travail, lorsqu'on perce avec des mèches conventionnelles, n'existe pas en travaillant avec des mèches-canons, parce que ces dernières ont un ramasseur de tournures sous forme de tiroir-collecteur, joint au conduit d'évacuation. Mais, en ce point, et dans "I A", une autre sorte de problème apparaît, qui, en outre, est grave. Le tiroir-collecteur et le conduit d'évacuation forment un sous-ensemble assez volumineux qui, si les vilebrequins sont en acier, sera encore plus volumineux, parce que les tournures d'acier sont grosses et difficiles à canaliser. Et la géométrie extérieure de ce sous-ensemble bute contre le bâti-caisse porte-vilebrequins et ses mécanismes entassés. Ceci arrive dans les 3^{e} et 4^{e} positions, les deux étant inclinées comme on l'a décrit au point a). Et pour éviter la collision, il faut se contenter de sous-ensembles tiroir-collecteur/conduit d'évacuation d'une taille insuffisante pour remplir leur focntion, ce qui donne lieu à une obstruction dans la fonction déterminante d'évacuer les tournures, des arrêts continuels de la machine et une maintenance inacceptable dans une production moyenne-élevée.

Voir au point b₁) que la disposition totalement différente de l'invention évite ce problème qui se présente dans "I A".

c).- Le pivotement, sur deux paliers, du bâti-caisse qui fixe les vilebrequins laisse le sous-ensemble uniquement en appui sur son axe de pivotement situé en position centrale et tout le reste demeure en l'air. Ce reste est trop vaste pour le laisser en l'air. Les vilebrequins sont des pièces allongées; à leurs bouts, il y a les éléments de référence et de fixation, qui rallongent encore plus le sous-ensemble et qui peuvent être de l'odre de 500-600 mm., parfois même davantage sur de longs vilebrequins, en l'air à droite de l'axe de pivotement et autant à gauche, sans aucun soutien additionnel à part l'axe de pivotement. L'autre côté du rectangle du bâti-caisse a, lui aussi, une grande dimension et les vilebrequins, avec tous les mécanismes reçus par le bâti-caisse supposent un poids important configurant un sous-ensemble mobile énorme et lourd, sur lequel, de plus, ont une incidence les forces de perçage. On ne peut pas bien faire face à cette situation uniquement avec l'axe de pivotement, et on n'y fait pas face non plus même si l'on ajoute un système de freinage à l'axe de pivotage, car ils demeurent éloignés des zones en l'air. Dans ce plan, les inclinaisons des vilebrequins, pour que les trous soient percés à certains angles par rapport à l'axe longitudinal des vilebrequins, n'ont pas une définition précise, car elles sont affectées par l'imprécision qui a pour origine les zones en l'air, dépourvues de toute fixation. En outre, les zones en l'air, faisant contrepoids, s'opposent à la précision des positionnements inclinés servocommandés par l'actionneur du pivotement.

Voir au point c1), comment dans l'invention présentée, la disposition est totalement différente à celle d"'IA", ce qui évite les inconvénients décrits ici.

d).- La rotation des vilebrequins autour de leur axe longitudinal respectif, pour que la position circonférentielle où doit être commencé le trou suivant, se situe en face de la mèche correspondante; dans "I A", c'est avec une transmission par courroie dentée, qui est reliée à trois poulies dentées, l'une sur l'axe du servomoteur et les deux autres sur les axes, qu'on fait tourner les deux vilebrequins. La transmission comporte un circuit en forme de triangle isocèle, avec des poulies sur les trois côtés. Cette disposition a les inconvénients suivants:
-. La courroie dentée, avec le temps et l'utilisation continue, s'allonge et il apparaît du jeu dans ses engrenages avec les poulies dentées, à l'origine d'un déficit dans la précision des positionnements circonférentiels des vilebrequins, lors de leur rotation autour des axes longitudinaux.
-. Les courroies dentées ont une durée de vie limitée et se cassent, d'où l'obligation de les remplacer périodiquement, ce qui est à l'origine de problèmes de maintenance , parce que la transmission est située à un endroit ayant un accès problématique, car elle est entourée d'un grand nombre d'autres mécanismes gênants.
-. La transmission, avec sa courroie, ses trois poulies dentées, son enveloppe protectrice et le servomoteur forment un sous-ensemble volumineux qui aggrave les problèmes d'espace que présente le bâti-caisse, où sont logés les vilebrequins et le reste des mécanismes. Ce sous-ensemble rend difficile l'accès en vue de la maintenance de ces mécanismes. Il crée également un assombrissement dans le sous-ensemble du bâti-caisse, ce qui affecte l'évacuation des tournures (voir point a).
-. Il y a un autre problème. En comptant sur les inconvénients signalés, la disposition est applicable à l'alternative de deux vilebrequins par cycle. Mais des inconvénients additionnels se présentent si, par exemple, il y a trois vilebrequins, du fait de la difficulté d'une transmission par courroie entre un axe actionneur (servomoteur) et trois axes situés en ligne.

Voir au point d1) comment l'invention qui est présenté n'a aucun de ces inconvénients, car elle est fondée sur une disposition totalement différente.

e).- L'axe W du module d'usinage porte les douilles de guidage des mèches. Dans l'alternative des mèches canons, les douilles prennent appui, en exerçant une certaine pression par un ressort, sur la zone du vilebrequin où commence le perçage de chaque trou, dans le but d'éviter que la tournure et le réfrigérant ne s'échappent. L'axe W a une direction parallèle à Z (avance des mèches) du module d'usinage et comporte un actionnement indépendant, de telle sorte que W avance d'abord jusqu'à placer les douilles dans l'une des positions alternatives décrites, ensuite Z avance en effectuant le perçage, pendant ce temps W demeure statique. Sur la machine "I A", l'axe W a la forme d'une tige/piston émergeant du corps qui porte les broches à percer et se plaçant entre les deux broches. Cette disposition a les inconvénients suivants:
-. La situation de la tige-piston au milieu des deux broches n'est possible que lorsque deux vilebrequins sont percés par cycle. Mais si on perce un ou plus de deux vilebrequins, comme le module d'usinage doit comporter un ou plus de deux broches, la situation de la tige pa rapport aux broches n'est pas équilibrée, des problèmes, des déséquilibres et des complications diverses se présentant au niveau des parties en l'air, qui affectent la stabilité des douilles de guidage des mèches pendant le perçage et, en conséquence, affectent la précision quant à la position des trous.
-. Comme la tige-piston est montée sur le corps qui porte les broches à percer, quand Z avance alors qu'on perce, cette avance entraîne simultanément W vers l'avant. Mais, suivant la description précédente, comme W avec ses douilles de guidage doit rester statique pendant qu'on perce, ceci oblige l'actionnement indépendant de W à reculer tandis que Z avance. De cette façon, la position relative entre les vilebrequins et leurs douilles de guidage respectives n'est pas altérée. Mais une telle combinaison d'avance de Z contre recul de W oblige à programmer une interpolation entre les deux servomécanismes, interpolation qui complique la programmation. S'agissant d'une machine souple et donc capable de percer des vilebrequins variés, toute complication comme celle qui a été expliquée, s'oppose à l'objectif souhaitable de simplicité maximale dans les opérations.
-. L'axe W, en forme de tige-piston, est à l'origine d'une assez grande ampleur entre le support qui porte les douilles de guidage et l'appui de la tige-piston sur le corps qui porte les broches. Et dans l'alternative d'un perçage avec une mèche-canon, le tiroir-collecteur avec le conduit d'évacuation, le tout pour recueillir les tournures, est également uni au support qui porte les douilles de guidage. Ceci donne lieu à un sous-ensemble volumineux, lourd et de grande ampleur par rapport à l'appui de la tige-piston, et celle-ci n'a pas la force ni la stabilité nécessaires à supporter un tel sous-ensemble, des inconvénients et des impossibilités d'application se présentant, même lorsqu'on perce deux vilebrequins par cycle et que la tige-piston se trouve au milieu des deux broches. Mais les inconvénients s'aggravent davantage lorsqu'au moment de percer un ou plus de deux vilebrequins par cycle, la situation de la tige-piston pa rapport aux broches, ajoute d'autres problèmes (voir inconvénient 1^{er} de e).

Du fait de l'accumulation des problèmes, on constate que la tige-piston n'est pas une bonne solution pour l'axe W. Voir au point e₁), comment l'invention qui est présentée évite tous ces inconvénients, avec la solution d'un chariot indépendant, au lieu d'une tige-piston montée sur le corps porte-broches.

f).- En cas de production moyenne-élevée, le chargement-déchargement des pièces dans la machine acquiert une grande importance, et-plus pour des pièces d'un certain poids et volume, comme dans le cas des vilebrequins, surtout si la machine usine plusieurs pièces par cycle. Généralement, des chargements/déchargements automatiques sont décidés, soit avec des portiques de manutention, soit avec d'autres systèmes comparables. Pour tout cela, le poste de chargement/déchargement des pièces doit offrir une liste de caractéristiques appropriées, et même doit inclure des alternatives additionnelles pour pouvoir faire face à des circonstances spéciales qui surviennent dans la production moyenne-élevée. L'objectif est de pouvoir organiser de façon favorable un sujet d'une telle importance, quelles que soient les circonstances qui se présentent dans chaque cas particulier d'application. Ce n'est pas pour rien si le but est une machine souple: il s'agit de s'adapter à des situations multiples. La machine "I A" ne présente pas ces caractéristiques idoines et n'offre pas non plus d'alternatives ajoutées. Le poste de chargement-déchargement est unique et très précaire. Il est unique, aussi bien pour le chargement-déchargement automatique que pour le manuel. Et cela suppose des dangers pour l'ouvrier dans l'opération manuelle, si l'automatique a dû être écarter provisoirement du fait d'une panne ou d'un travail de maintenance. Car, ces machines étant placées sur une chaîne avec plusieurs unités de production reliées à un long système de transport et de manipulation des vilebrequins, qui agit simultanément avec des bras multiples sur les unités de production respectives, si dans l'une de ces stations, il y a un dysfonctionnement, par exemple, dans les pinces de prise des vilebrequins à manipuler, il faut annuler dans cette station l'automatisme de chargement-déchargement; cependant, le système général de transport et de manipulation continue à fonctionner au-dessus des stations en général et si l'ouvrier effectue le chargement-déchargement manuel dans la station affectée, il doit faire face à certaines incommodités voire à des risques, du fait de la difficulté à établir une sécurité totale, à cause du système général qui continue à fonctionner au-dessus de lui.

Dans f₁), sont décrites les caractéristiques appropriées et les alternatives additionnelles qu'offre l'invention présentée sur le chargement-déchargement en se basant sur une disposition totalement différente.

g).- Le changement automatique des mèches + leurs douilles de guidage ou seulement des douilles, lorsqu'on le juge intéressant, exige dans "I A" un axe additionnel "U", qui oblige à avoir des colonnes, un portique, un chariot porteur des éléments à changer, avec leur actionnement sous forme de chaîne sans fin, sans compter d'autres mécanismes complémentaires. Et tout cela suppose des entassements et des gênes considérables, qui doivent occuper et se déplacer dans l'allée précaire entre le module d'usinage et le sous-ensemble qui porte les vilebrequins. La précarité et le manque d'espace sont tels que le sous-ensemble indiqué est obligé de se placer verticalement par rapport au bâti-caisse, avec tout ce qu'il contient (vilebrequins, outils, etc.), car s'il n'en est pas ainsi, il n'y aura pas de place pour déplacer l'axe U, qui fait le changement automatique de mèche, etc. Il s'agit d'une solution compliquée, coûteuse, gênante, pas du tout appropriée pour une machine souple.

Dans g₁), on verra une solution tout à fait novatrice de l'invention qui est présentée, qui évite les inconvénients qui apparaissent dans "I A".

h).- En ce qui concerne la productivité d'une machine axée vers une production moyenne-élevée, si l'on prétend atteindre l'objectif de la souplesse recherchée, des possibilités additionnelles sont habituellement intéressantes, par exemple:
-. Que la machine ait deux stations ou postes, l'un pour l'usinage et l'autre pour le chargement-déchargement des pièces. Ainsi, on peut charger-décharger dans une station, tandis que l'on usine dans l'autre et on économise tout le temps de manutention, chargement-déchargement et fixation des pièces, la productivité étant accrue avec un investissement économique légèrement supérieur, à cause du doublement des outils.
-. Il peut également être intéressant d'organiser des cellules, avec deux modules d'usinage en face l'un de l'autre, avec un sous-ensemble situé de façon centrale et portant les vilebrequins avec les outils, également en plan duplex. C'est comme s'il s'agissait d'une cellule "miroir". Elle double la production avec un investissement inférieur au double.

Ces possibilités n'existent pas dans "1 A". En revanche, grâce à la disposition totalement différente, elles existent dans l'invention qui est présentée, comme on le verra au point h₁) et dans les dessins et la description.

i).- Un problème redoutable en production moyenne-élevée, c'est ne pas avoir une accessibilité directe et commode à toutes les parties de la machine, en toute circonstance de réglage, contrôle ou entretien. Ceci exige une disposition intelligente de tous les mécanismes/sous-ensembles/ ensembles. Cela n'arrive pas dans "1 A", où il y a un amoncellement des parties qui se gênent les unes les autres.

En revanche, dans i₁) et dans les dessins, on constatera que l'invention qui est présentée est dégagée, accessible de n'importe quel côté, grâce à sa disposition où l'on a évité toute complication inutile et tout entassement.

### EXPLICATION DE L'INVENTION

En fonction de l'importance de la production, l'invention qui est présentée permet de fabriquer ou de disposer d'un, deux ou_plus vilebrequins à percer par cycle. La disposition pour deux vilebrequins a été dessinée, mais uniquement à titre d'exemple, les autres alternatives quant au nombre de vilebrequins étant valables. Les caractéristiques différentielles de l'invention, la disposition novatrice qui permet d'éviter les inconvénients et/ou déficits de "I A" et les avantages qu'elle offre ont été résumés ci-dessous. Pour une meilleure compréhension, les paragraphes a), b), c) .../... indiqués auparavant pour "I A" correspondent au même sujet avec a₁), b₁), c₁) .../... de l'explication de l'invention, qui est décrite ci-dessous.

a₁).- Pendant le chargement-déchargement et la fixation des vilebrequins et également durant toutes les séquences des positionnements avant chaque perçage, ainsi que pendant qu'on effectue ces perçages, c'est-à-dire tout le temps pendant lequel les vilebrequins restent dans la machine, leurs axes longitudinaux demeurent horizontaux en permanence (à la différence de "I A", avec différentes inclinaisons par rapport à l'horizontale). Un vilebrequin est situé au-dessus d'un autre, à la distance parallèle opportune. Cela supprime le bâti-caisse de "1 A", son pivotement, enfin, la disposition est totalement différente, la zone de travail est dégagée, sans que ne soit gênée la chute libre des tournures produites par les perçages. Et, n'y ayant pas de tournures sur les outils de fixation des vilebrequins, il n'y a pas de danger de dysfonctionnements lors de chargements-déchargements automatiques.

b₁).- Le bâti-caisse d' "I A" n'existant pas avec son pivotement pour différentes inclinaisons par rapport à l'horizontale, le tiroir-collecteur avec son conduit d'évacuation des tournures (lorsqu'on travaille avec des mèches-canons), ne heurte pas les outils de fixation des vilebrequins et de leurs mécanismes avoisinants, un tiroir-collecteur et un conduit d'évacuation avec la taille volumineuse requise pouvant être appliqué, notamment au moment de percer des vilebrequins en acier.

c₁).- Du fait qu'il n'existe ni bâti-caisse ni son pivotement, il n'existe pas de parties en l'air, ni frein dans l'axe de pivotement, ni gros poids/masses dépourvues de fixation, ni les répercussions négatives avec la précision découlant de telles caractéristiques négatives.

L'une des nouveautés essentielles, qui a permis d'éluder les inconvénients de c) et aussi ceux des autres paragraphes, est fondée sur un plateau tournant à plaque du dessus horizontale et à axe de rotation vertical, sur lequel est totalement appuyé et fixé le sous-ensemble qui porte les vilebrequins. Ce plateau ayant un axe vertical pivotant permet au sous-ensemble qui porte les différents vilebrequins, situés parallèlement entre eux, et avec leurs axes longitudinaux toujours en position horizontale de pouvoir tourner jusqu'à différentes positions d'inclinaison dans le plan horizontal, par rapport à l'axe Z d'avance de la mèche du module d'usinage, pour percer les trous inclinés par rapport à l'axe longitudinal des vilebrequins. Cette solution totalement différente ne comporte pas de complexité excessive, ni d'inconvénients et elle comporte tous les avantages souhaitables, qui affectent positivement aussi bien ce point c₁) que tous les points suivants.

Le plateau tournant à axe vertical est servo-actionné par un servomoteur et un mécanisme sans fin-roue ayant un jeu zéro, avec 360.000 positions programmables, qui garantissent une précision très stricte dans les positionnements des perçages, aussi bien des trous inclinés par rapport aux axes longitudinaux des vilebrequins, qui demandent des positionnements du plateau ± N°, que des trous non inclinés et perpendiculaires à ces axes longitudinaux, qui demandent un positionnement du plateau à 0°. Le reste des positionnements est à: -90°, -180° et -270°, afin d'obtenir les combinaisons qui sont indiquées au point f₁).

d₁).- La disposition pour la rotation des vilebrequins autour de leurs axes longitudinaux respectifs, qui présente dans "I A" des inconvénients multiples et graves, est complètement différente dans l'invention et sans inconvénients, car il n'existe ni courroie dentée, ni poulies dentées, ni couverture protectrice. Le servomoteur, par l'intermédiaire d'un accouplement, transmet sa rotation à une vis sans fin, qui s'engrène avec sa roue ou sa couronne, cette dernière étant montée sur l'axe lui-même, où est fixé le vilebrequin le plus élevé. Mais des rotations synchronisées et exactement identiques sont transmises simultanément aux vilebrequins situés au-dessous du plus élevé, avec des vis sans fin et des roues identiques et, au moyen d'un axe à actionnement multiple, qui traverse la disposition de haut en bas. L'axe d'actionnement, les vis sans fin et les roues sont à précision et jeu zéro, ce qui permet d'obtenir dans tous les vilebrequins des rotations de positionnement de grande précision. Le servomécanisme est doté d'un encodeur de mesure positionnelle qui garantit une grande précision.

Cette disposition innovatrice a un autre avantage important: les mécanismes qui interviennent ne sont pas volumineux et ne gênent pas dans la zone de travail. Le servomoteur (avec son axe en position verticale) est au-dessus de cette zone, plus haut que les outils porte-vilebrequins. Et le reste du mécanisme, simplifié et compact, se retrouve derrière les outils, entre ceux-ci et la partie frontale qui les supporte, abrité et éloigné de la zone de perçage et de la chute des tournures. Ainsi, toutes les tournures ont une chute libre sans obstacles.

Autre avantage: si, au lieu de deux vilebrequins par cycle, il y en a un ou plus de deux, la disposition est valable, car, avec un vilebrequin, le servomoteur actionne directement la seule vis sans fin et, avec plus de deux, il suffit d'allonger l'axe à actionnement multiple.

e₁) .- L'axe W, qui porte les douilles de guidage des mèches, se déplace sur un chariot ayant des guides linéaires et des patins-roulement. Il s'agit d'une disposition complètement différente, qui dépasse, sans aucune comparaison, les prestations de la tige-piston de "1 A". La direction du mouvement est parallèle à Z, et son actionnement est indépendant. De même, le chariot est indépendant du corps porte-broches à forer qui avance suivant l'axe l'axe Z. Aux points suivants, il y a une description des inconvénients évités et des avantages de l'invention:
-. Par système et étant donné la force du chariot, il est valable pour porter les douilles de guidage des mèches, aussi bien avec un/deux/ ou plus de deux vilebrequins par cycle, parce qu'avec le chariot, le problème de la tige-piston dans sa position relative par rapport aux broches ne se pose pas, le chariot étant indépendant du corps qui porte les broches. On évite ainsi les parties aériennes, les déséquilibres, etc.
-. L'indépendance du chariot W, par rapport au corps porte-broches à forer qui avance suivant l'axe Z, évite la programmation par interpolation des deux axes Z et W. Ainsi, W avance jusqu'au point où il doit se placer statiquement, Z avance ensuite pour percer, mais comme cette avance n'entraîne pas W, comme cela arrive dans la disposition "I A", W n'a pas la nécessité de reculer (par interpolation), recul qui contrecarre l'entraînement non souhaité que provoque l'avance Z dans "I A". Une programmation plus simple et plus rapide.
-. Le chariot présente une force suffisante pour supporter non seulement les douilles de guidage, mais aussi le sous-ensemble volumineux et lourd du tiroir-collecteur avec le conduit d'évacuation, qui est nécessaire pour recueillir les tournures dans l'alternative des mèches-canon, avantage qui est plus important quand il s'agit de vilebrequins en acier, qui exigent du sous-ensemble mentionné qu'il soit volumineux et, par conséquent, lourd.

f₁).- Sur les dessins de l'invention qui est présentée, on peut voir, sur la base d'une disposition innovatrice du plateau tournant avec plaque supérieure horizontale et axe de rotation vertical, la machine à la possibilité d'avoir quatre stations (tous les 90°), qui permettent les combinaisons suivantes, qui sont mieux comprises sur la Fig. 4e:
-. 1^{ère} stat.: perçages et 2^{e} stat.: chargement-déchargement automatique.
-. 1^{ère} stat.: perçages et 3^{e} stat.: chargement-déchargement automatique.
-. 1^{ère} stat.: perçages, 2^{e} stat.: chargement-déchargement automatique et 3^{e} stat. chargement-déchargement manuel.
-. 1^{ère} stat.: perçages, 2^{e} stat.: chargement-déchargement manuel et 3^{e} stat.: chargement-déchargement automatique.

(*) 1^{ère} stat.: perçages et 3^{e} stat.: chargement-déchargement automatique, réalisé pendant qu'on perce, c'est-à-dire en économisant le temps de manipulation, de chargement-déchargement et de fixation des vilebrequins et, par conséquent, en augmentant la production. Ceci exige le doublement des outils de fixation des vilebrequins.
(*) 1^{ère} et 3^{e} stat.: perçages avec deux modules face à face et en doublant le nombre des outils de fixation des vilebrequins, en formant une cellule "miroir" et 2^{e} et 4^{e} stat.: chargement-déchargement automatique. La production est doublée avec un investissement inférieur au double.

Ces six combinaisons possibles et le fait de compter quatre stations pour y parvenir démontrent le caractère incomparable de la disposition et des résultats avec "I A", qui n'a qu'une unique station précaire et une seule modalité fonctionnelle dans ces sujets.

En outre, dans la modalité chargement-déchargement manuel (utilisée lors des essais et lorsque, de façon circonstantielle, la modalité automatique a été annulée pour cause de panne ou de maintenance), la manipulation est bien moins forcée et bien plus commode avec les deux vilebrequins, l'un au-dessus de l'autre, près et parallèles au torse de l'ouvrier, en comparaison avec "I A", qui exige de mettre et de faire sortir les vilebrequins dans/d'un bâti-caisse situé horizontalement, à une trop grande hauteur et trop loin du torse de l'ouvrier, ce qui oblige ses bras étendus à avoir des mouvements incommodes et fatigants, qui provoquent des lésions dans la colonne vertébrale, et d'autant plus si l'on tient compte du poids et du volume des vilebrequins. Et quoique ce soient des situations circonstantielles, elles se produisent avec une certaine fréquence, c'est pourquoi il est important qu'elles aient la solution la meilleure et la plus commode.

La station de chargement-déchargement manuel, étant indépendante et assez éloignée de la station de chargement-déchargement automatique, permet d'implanter toutes les sécurités qu'exige l'industrie automobile, pour éviter des risques à l'ouvrier (porte de sûreté, etc.), parce qu'elle ne demeure pas au-dessous du système général de transport et de manipulation automatique des vilebrequins, qui continue à fonctionner au-dessus, dans le cas d'une chaîne ayant plusieurs unités de production desservies par ce système général.

Des aspects qui démontrent que la disposition de l'invention n'est pas comparable à "I A" et que les résultats en sont d'une énorme supériorité.

g₁).- Les dessins de l'invention qui est présentée et leur description montrent que le système de changement automatique des mèches + leurs douilles de guidage ou seulement de leurs douilles, lorsqu'on le juge intéressant, profite du déplacement de l'axe X pour mener le module d'usinage vers la zone droite où est situé le magasin des éléments à changer et profite également des déplacements des axes Z et W pour extraire-introduire ces éléments dans la broche et les prendre et les laisser dans le magasin. La simplification est maximale: trois axes X, Z et W, qui sont nécessaires pour que le module d'usinage remplisse ses propres fonctions de positionnements et d'avances du perçage, servant de surcroît au changement automatique des mèches et des douilles de guidage. De cette manière, on évite tout ce qui était gênant et compliqué dans "I A": colonnes, portique, chariot porteur des éléments à changer, son fonctionnement sous forme de chaîne sans fin, etc. Un tel évitement, non seulement annule complications et investissement, car on évite également l'énorme encombrement qui est si problématique dans "I A".

h₁).- En ce qui concerne la productivité et son rapport avec l'investissement économique, les deux dernières combinaisons indiquées avec un astérisque (*) dans f1) montrent que l'invention présente des possibilités ajoutées, qui sont impossibles dans "I A". Ceci permet d'élargir également l'idée de souplesse à l'amplitude du champ d'application.

i₁).- Il suffit d'analyser les dessins pour estimer que l'accessibilité, directe et commode, à toutes les parties de l'invention, dans des circonstances de réglage, de contrôle ou de maintenance, est obtenue grâce à la disposition intelligente de tous les mécanismes/sous-ensembles/ensembles, au fait d'éviter des complications inutiles et d'éviter des amoncellements qui entraînent tant de problèmes dans "I A".

### BRÈVE DESCRIPTION DES DESSINS

Les différences avec les précédents, le fait d'éviter leurs inconvénients et/ou le déficit, ainsi que les avantages de l'invention qui est présentée, seront évidents dans les dessins suivants qui sont joints (complétés avec la description détaillée qui suit):
FIGURE 1 - s'agit d'une vue latérale de l'objet de l'invention qui, à gauche, montre le plateau tournant avec plaque du dessus horizontale et axe de rotation vertical; au-dessus, on trouve le sous-ensemble qui porte les vilebrequins; à droite, il y a le module d'usinage qui fait apparaître longitudinalement les axes Z et W et, verticalement, l'axe Y.
FIGURE 2 - Il s'agir d'une vue générale en plan (de la figure 1).
FIGURE 3 - Il s'agit d'une vue frontale du module d'usinage (6), magasin à mèches et à douilles de guidage (7),ce magasin étant remplacé, à la figure 3a, par un magasin à chaîne.
FIGURE 4a - Il s'agir d'une vue en plan, avec le plateau tournant à axe vertical en position 0°, pour percer les trous perpendiculaires aux axes longitudinaux des vilebrequins.
FIGURE 4b - Il s'agit d'une vue en plan, avec le plateau tournant à axe vertical en position -N°, pour percer les trous inclinés (à une direction), par rapport aux axes longitudinaux des vilebrequins.
FIGURE 4c - Il s'agit d'une vue en plan, similaire à la Fig. 4b, mais avec le plateau tournant à axe vertical en position +N°, pour percer les trous inclinés ayant une direction inverse à la précédente.
FIGURE 4d - Il s'agit d'une vue en plan, avec le plateau tournant à axe vertical en position -90°, comme station de chargement-déchargement (soit manuelle, soit automatique).
FIGURE 4e - Il s'agit d'une vue en plan, similaire à la Fig. 4d, mais en position -180°, en tant qu'autre possibilité de station de chargement-déchargement (dans l'alternative manuelle ou automatique inverse à celle qui a été choisie à la Fig. 4d). Ici, les 1^{e}, 2^{e}, 3^{e} et 4^{e} stations sont indiquées, étant séparées tous les 90°.
FIGURE 5a - Il s'agit d'une vue en plan qui montre la réalisation particulière, avec doublement des outils de fixation des vilebrequins. Cf. 1^{er} astérisque (*) au point f1), indiqué également au point h1).
FIGURE 5b - Il s'agit d'une vue en plan qui montre la réalisation particulière, avec doublement aussi bien des outils de fixation des vilebrequins que des modules d'usinage (cellule "miroir"). Cf. 2^{e} astérisque (*) au point f1, indiqué également au point h1).
FIGURE 6 - Il s'agit d'une vue/demi-coupe frontale des outils de fixation des deux vilebrequins.
FIGURE 6a - Il s'agit d'une vue partielle suivant la flèche "M", indiquée sur la figure 6.
FIGURE 7 - Il s'agit d'une vue en plan de la figure 6.
FIGURE 8 - Il s'agit d'une section du dispositif d'actionnement des rotations suivant la flèche (B) des vilebrequins autour de leur axe longitudinal. C'est la disposition qui est montrée, à droite, sur la figure 6, avec le servomoteur (37) à axe vertical.
FIGURE 9 - Il s'agit d'une section du dispositif d'actionnement du plateau tournant à plaque du dessus horizontale et rotation suivant la flèche (A), à axe vertical.

### DESCRIPTION DÉTAILLÉE DE LA RÉALISATION PRÉFÉRÉE

Comme on le montre sur les dessins et dans la description qui suit, l'invention fait allusion à "un processus et une machine souples pour percer des trous de graissage dans différentes positions et dans une gamme variée de types de vilebrequins".

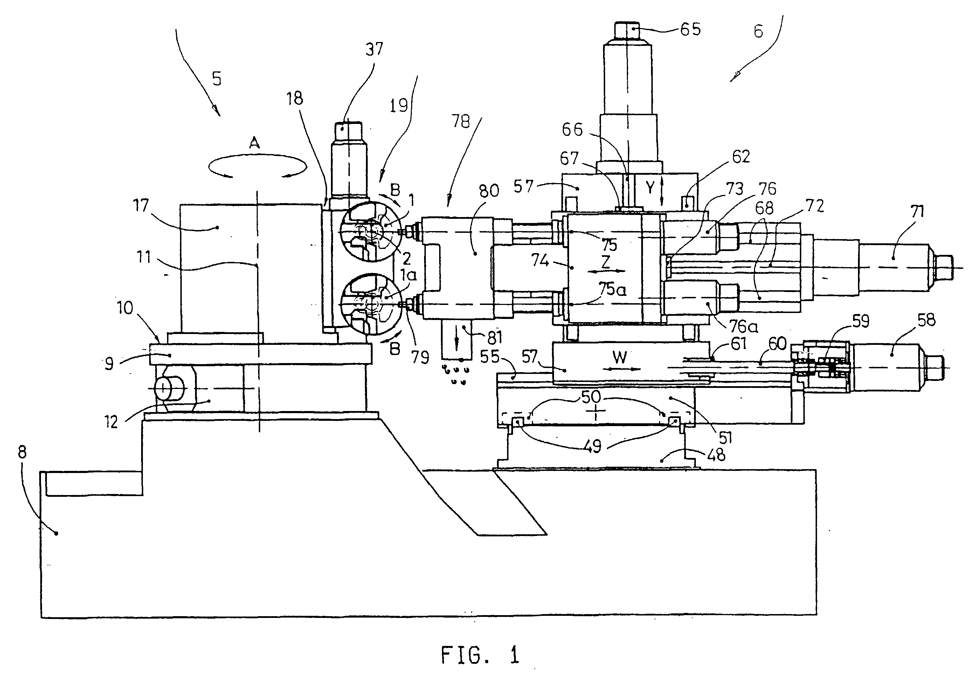

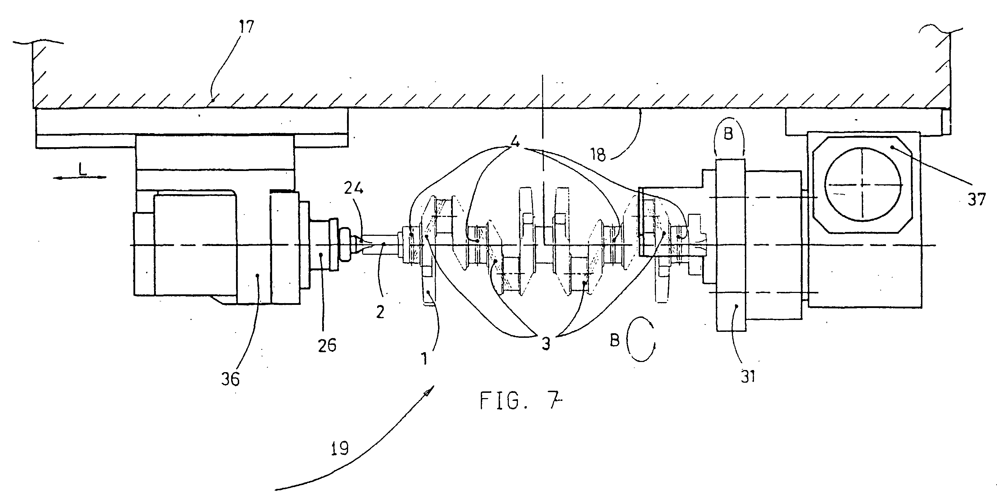

Le vilebrequin (1) comporte un axe longitudinal (2), figures 1, 2, 6. Pour son fonctionnement dans le moteur à combustion, il a besoin de plusieurs trous de graissage bien différenciés, les uns inclinés (3) ayant différentes directions (figure 7) et d'autres perpendiculaires (4) à l'axe longitudinal. Ces trous ont différentes positions sur toute la longueur et la largeur de l'axe longitudinal (2) et ils ont également différents positionnements sur la circonférence que décrit le vilebrequin lorsqu'il tourne sur son axe longitudinal (2. Lorsque la forme et/ou les dimensions d'un vilebrequin sont changées, ou lorsqu'on change la cylindrée d'un moteur, ce qui arrive, assez fréquemment, c'est qu'il faut varier les positionnements longitudinaux, les transversaux (sur la largeur) et les circonférentiels, ainsi que les angles d'inclinaison des trous de graissage. On peut également varier le nombre de trous à percer, et tout ceci exige une procédure et une machine souples, permettant de s'adapter de façon rapide et commode lors de chaque changement, et garantissant la précision et la production nécessaires.

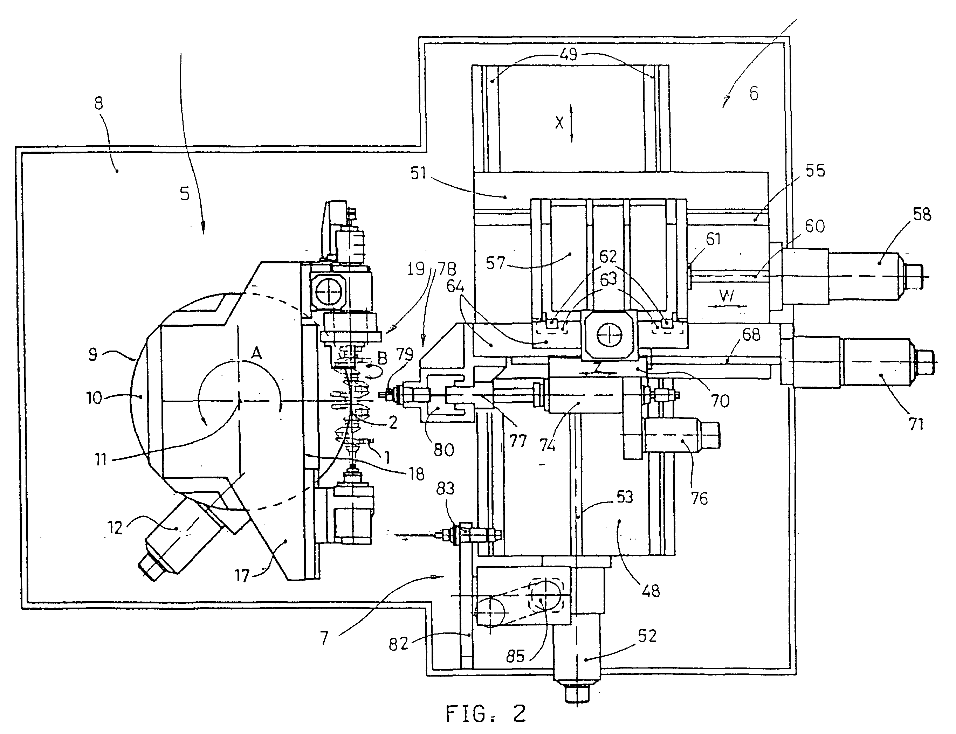

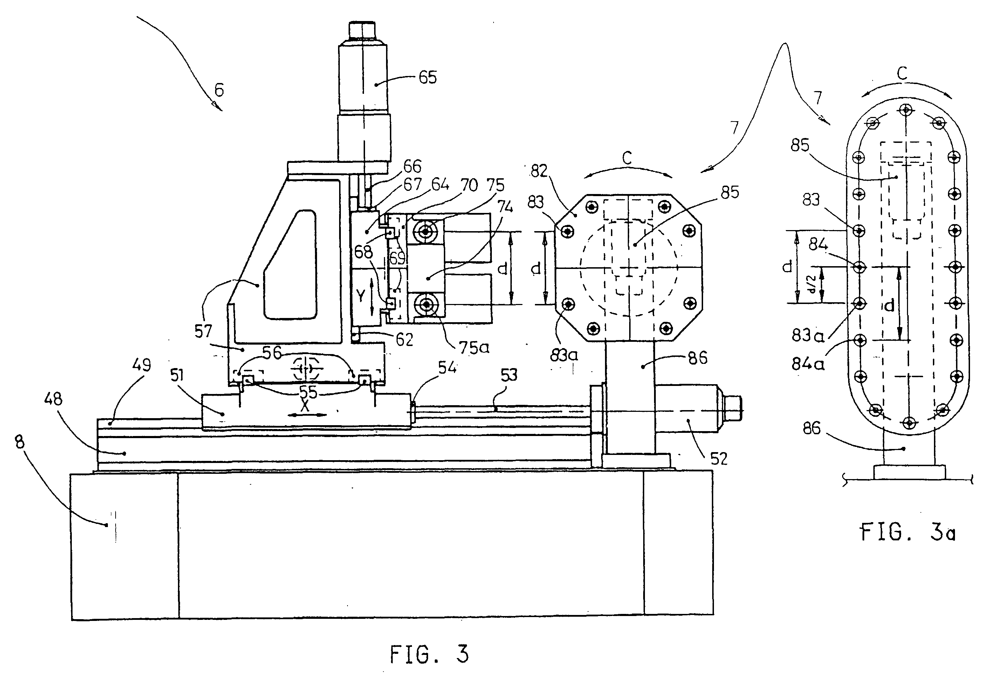

La machine se subdivise en trois ensembles essentiels:
-. L'ensemble (5) qui porte les vilebrequins, montré à gauche sur les figures 1 et 2. Il comprend deux rotation, l'un (A) du plateau tournant avec plaque du dessus horizontale et à axe de rotation vertical, et un autre (B) de rotation des vilebrequins sur leur axe longitudinal (2).
-. Le module d'usinage (6) qui porte les mèches et les douilles de guidage pour percer les trous de graissage. Les figures 1 et 2 le montrent à droite et la figure 3, à gauche. Il comprend les déplacements suivant les axes X, Y, Z et W.
-. Le magasin (7) contenant les mèches et leurs douilles de guidage, qui fonctionne en combinaison avec le système de changement automatique de ces éléments. Le magasin a une rotation (C).

Les rotations (A), (B) et (C) et les déplacements suivant les axes X, Y, Z et W sont servo-actionnés par des servomoteurs qui, dirigés et vérifiés par le contrôle numérique et le logiciel implantés, dotent l'unité de production de la souplesse demandée, qu'on ne peut obtenir avec les lignes transferts de plusieurs stations. La souplesse évite des reconversions de machine, coûteuses et incommodes. Chaque servomoteur est doté de son encodeur de mesure respectif, qui garantit la précision de tous les positionnements.

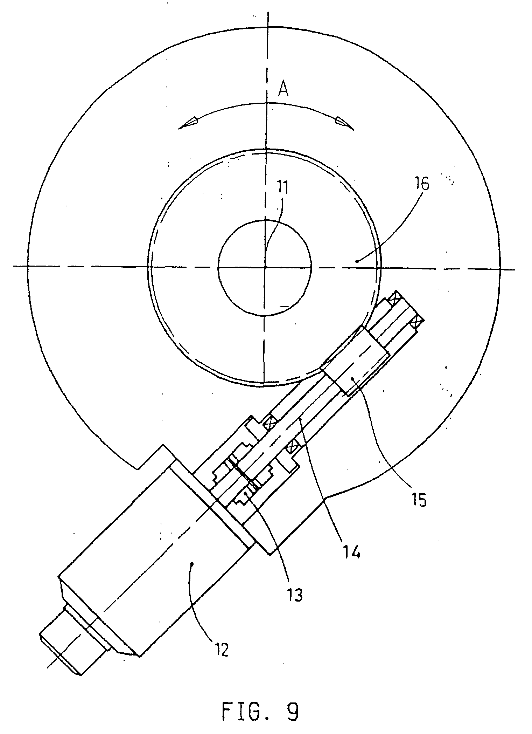

Le module d'usinage (6) et le magasin (7) à mèches et à douilles de guidage sont fixés à la surface de la carcasse (8), doté d'une petite table à laquelle est fixé l'ensemble porte-vilebrequins (5).
-. L'ensemble porte-vilebrequins (5) est composé de: plateau tournant (9), avec plaque du dessus horizontale (10) et axe de rotation vertical (11) -figures 1 et 2-. La rotation du plateau est assurée par un servomoteur (12) (figure 9) au moyen d'un accouplement (13) et d'un axe (14), qui actionne la vis sans fin (15), qui s'engrène sur la roue (16) solidaire du plateau (9) qui effectue les rotations (A) suivant l'axe vertical (11). La vis sans fin et la roue sont de précision (jeu "zéro"). Le servomécanisme permet 360.000 positions programmables, ce qui en augmente la précision positionnelle.

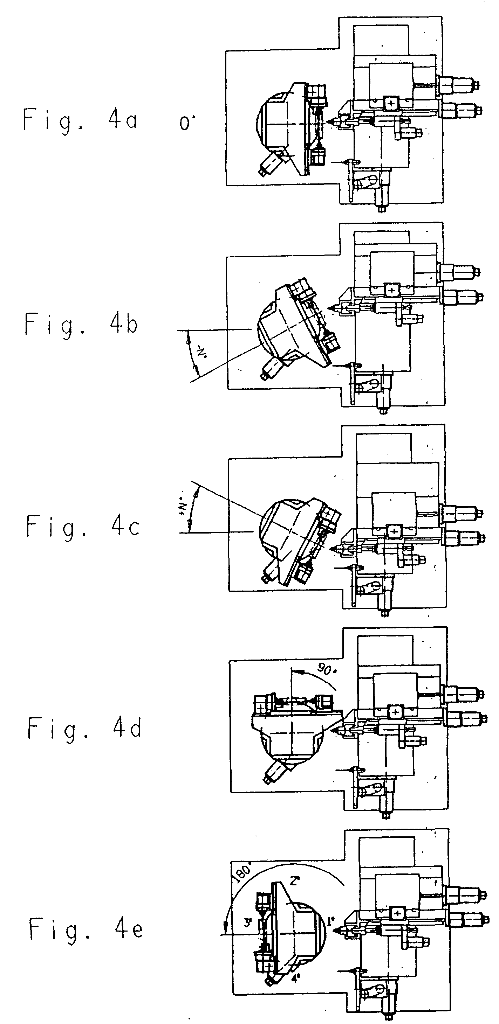

Le plateau tournant (9) à axe vertical, aura successivement différentes positions entre -N°, 0° et +N° -figures 4a, 4b et 4c-, appropriées aux différents trous à percer dans les vilebrequins. La position 0° correspond aux trous (4) -figure 7-perpendiculaires à l'axe longitudinal (2) des vilebrequins. Les positions -N° et +N° correspondent aux trous (3) -figure 7- ayant une direction, et l'autre, formant un angle par rapport à l'axe longitudinal (2) des vilebrequins dans le plan horizontal.

Les 2^{e} et 3^{e} stations, de chargement-déchargement des vilebrequins, sont statiques et elles sont situées à -90° et -180° respectivement -figures 4d et 4e-.

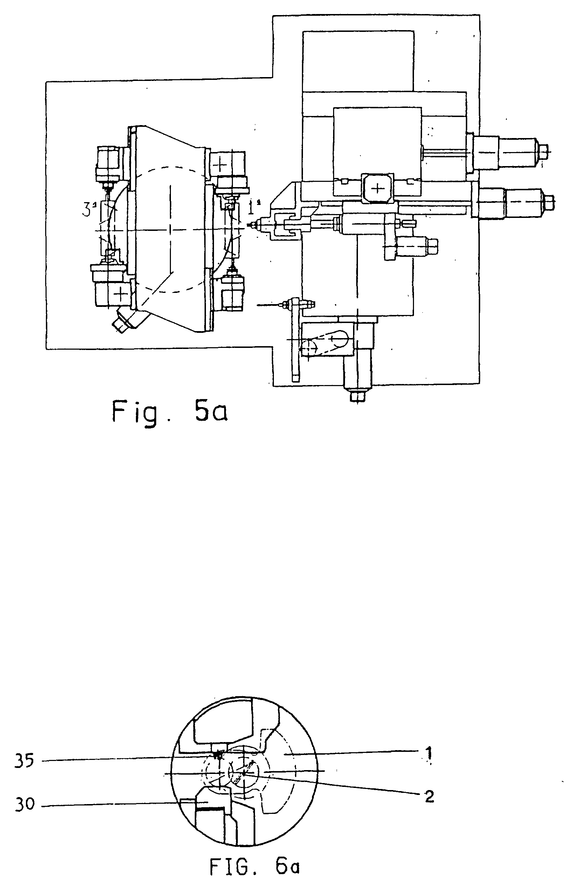

Sur la figure 5a, le chargement/déchargement dans la 3^{e} station s'effectue alors que le plateau (9) est statique en position 0° au moment de percer les trous (4) qui sont perpendiculaires à l'axe longitudinal (2) des vilebrequins.

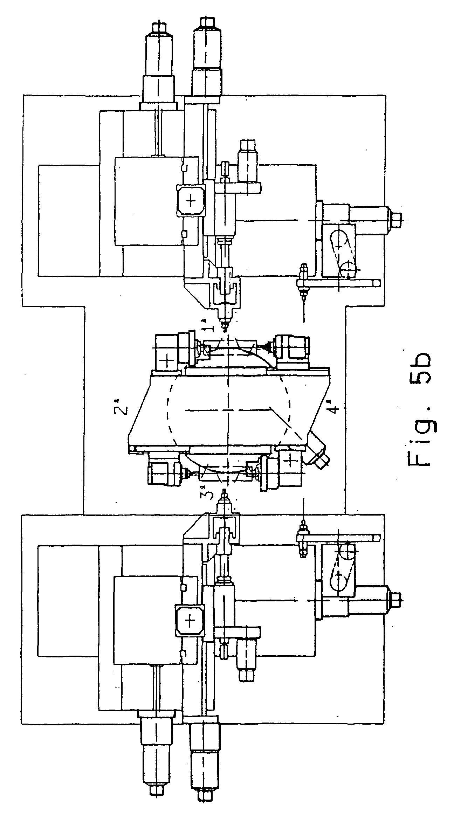

Sur la figure 5b, s'agissant d'une cellule "miroir", ce qui se passe dans la 1^{ère} station se répète comme un reflet dans la 3^{e} station.

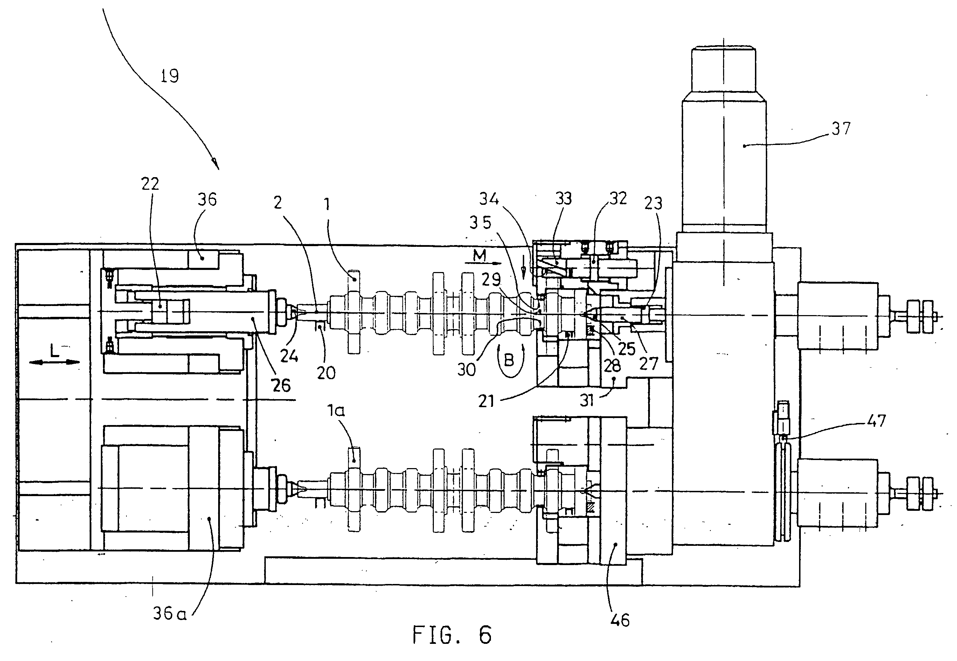

Sur la plaque du dessus (10) du plateau tournant (9), on trouve le corps-équerre (17) qui, sur sa face frontale (verticale) (18) reçoit le sous-ensemble (19) - figure 6- qui porte les vilebrequins. Les figures 1 et 6 montrent deux vilebrequins par cycle, nombre le plus équilibré et, par conséquent, applicable de préférence. C'est pourquoi il s'agit de l'exemple sur les dessins et dans la description. Cependant, en fonction d'une production demandée plus ou moins grande, l'invention est également applicable aux options d'un ou plus de deux vilebrequins par cycle.

Le sous-ensemble (19) comprend les parties suivantes:
-. Disposition pour recevoir / référencer / fixer les vilebrequins (1) et (1a) -figure 6-. Le chargement, manuel ou automatique, les laisse posés sur des appuis d'accueil (20) et (21). On réalise ensuite la prise des différentes références: l'une est axiale (longitudinalement), l'autre centre son axe (radialement) et l'autre est circonférentiel (angulairement). L'axial et celui de centrage profitent, en commun, des poussées des vérins hydrauliques (22) et (23). Le vérin gauche (22) a une plus grande force que le droit (23). Les deux comportent des points coniques (24) et (25) de centrage, aux bouts de leurs tiges saillantes (26) et (27). Le vérin gauche (22) pousse le vilebrequin vers la droite avec la référence axiale (28) située à la partie droite du vilebrequin, et du fait de sa plus grande force, il prévaut contre la moindre force du vérin droit (23), les deux avec leurs points coniques introduits dans les cônes femelles se trouvant sur les deux faces extrêmes du vilebrequin. De cette façon, on obtient aussi bien la prise de référence axiale que celle de centrage. On obtient également une légère fixation axiale partielle, partielle parce qu'il existe une autre fixation complémentaire qui est décrite ci-dessous, et légère parce qu'il n'est pas intéressant qu'elle soit trop forte, afin d'éviter la flexion non souhaitable d'une pièce aussi zigzagante que le vilebrequin. La légère force de fixation axiale est égale à la différence des forces entre les deux vérins hydrauliques opposés (22) et (23). Elle soustrait la référence circonférentielle basée sur la 1^{ère} petite poupée (29) de l'extrémité droite du vilebrequin. Cette petite poupée (29) pose son diamètre sur la référence (30) qui ressort de l'actionneur pivotant (31) vers la gauche. À la partie opposée de cette référence, il y a le vérin hydraulique (32) avec renvoi des forces à 90°, au moyen de deux cales (33) et (34), de telle sorte que le pousseur (35) exerce une pression sur le diamètre de la petite poupée (29) contre la référence (30). Ce qui permet d'atteindre deux objectifs: 1) référencer le vilebrequin dans la position circonférentielle correcte et 2) fixer, en cette occasion plus fortement, parce que la direction de cette force ne provoque pas de flexion, cette dernière fixation étant un complément de la précédente à direction axiale et avec une légère force. La somme des deux fixations est plus que suffisante pour résister aux efforts liés au perçage.

Dans le but de simplifier la description, le paragraphe précédent se rapporte à un vilebrequin au singulier, mais aussi bien les dessins que le reste de la description générale se rapportent au couple de vilebrequins de la réalisation préférée. Cette explication ayant pour but de considérer comme doublés les outils de fixation et la prise de références indiqués.

Les vérins hydrauliques gauches (22) et (leur jumeau), avec leurs tiges (26) et leurs points coniques de centrage (24) sont montés sur deux supports (36) et (36a), qui sont fixés sur la face frontale (18) du corps-équerre (17) -figure 6-, mais ils sont déplaçables dans la direction de la flèche (L), pour adapter leur position aux différentes longueurs des vilebrequins.

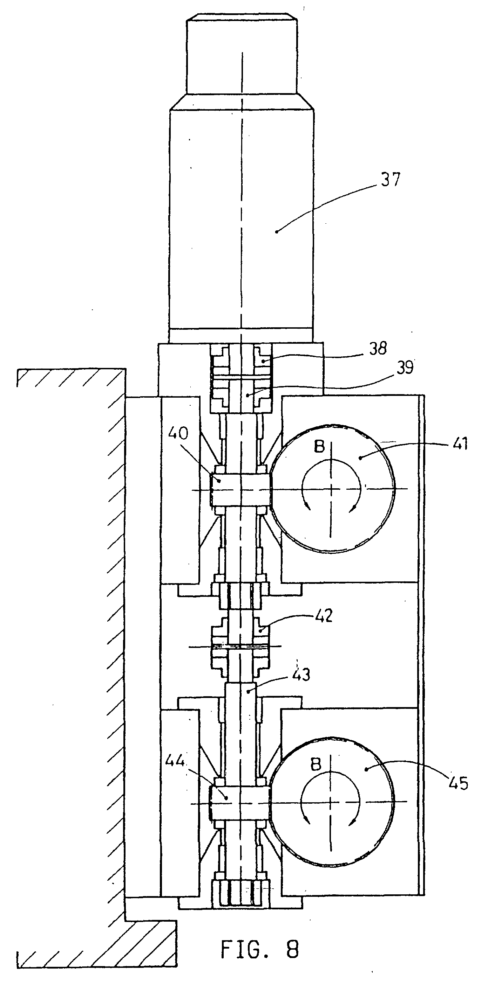

A tout moment, les vilebrequins (1), (1a) demeurent dans un plan horizontal.
-. Disposition pour obtenir différents positionnements circonférentiels, les vilebrequins (1) tournant autour de leur axe longitudinal (2). Le résultat en est la rotation suivant la flèche (B) -figures 1, 2, 6, 7 et 8- Sur la figure 8, on montre le servomoteur (37) qui, par l'intermédiaire de l'accouplement (38) et de l'axe (39) transmet sa rotation à la vis sans fin (40) qui s'engrène sur la roue (41) solidaire de l'actionneur pivotant (31) -figures 6 et 7-, qui porte les éléments (30) et (35), qui comportent trois fonctions, l'une étant de servir de référence circonférentielle et une autre pour la fixation complémentaire, les deux ayant été décrites au paragraphe précédent, la 3^{e} fonction étant celle de faire tourner le vilebrequin au moyen de la petite poupée fixe (29) et l'actionnement de la rotation qui est issue du servomoteur (37). Ce qui a été décrit arrive dans le vilebrequin situé à une plus grande hauteur et, de façon simultanée et synchronisée, le même actionnement de rotation se répète dans le 2^{e} vilebrequin situé au-dessous, au moyen des éléments répétés, qui sont l'accouplement (42), l'axe (43), la vis sans fin (44), la roue (45), l'actionneur pivotant (46), etc. Cette disposition est dotée d'un capteur (47) permettant de déterminer l'origine (homing) de ces rotations autour de l'axe longitudinal (2) des vilebrequins (1) et (1a).
-. Le module d'usinage (6) -figures 1, 2 et 3- est composé de:
   - Axe X (horizontal-transversal) à base (48) à laquelle sont fixées les glissières prismatiques ou rails (49) sur lesquelles glissent les patins-roulements linéaires (50) solidaires du chariot ou table mobile (51), qui se déplace suivant la flèche X. Le servomoteur (52), au moyen d'un accouplement, actionne la broche à billes (53) vissée sur l'écrou (54) solidaire du chariot (51).
   - Axe Y (vertical) qui, sur la face frontale du chariot-colonne (57) maintient les rails (62) fixes, rails sur lesquels glissent les patins-roulements linéaires (63) solidaires du chariot (64), qui se déplace verticalement suivant la flèche Y. Le servomoteur (65), par l'intermédiaire d'un accouplement, actionne la broche filetée (66) vissée dans l'écrou (67), solidaire du chariot (64).
   - Axe Z (horizontal et parallèle à W), qui maintient, sur la face frontale du chariot (64) de l'axe Y, les rails (68) fixes, rails sur lesquels glissent les patins-roulements linéaires (69) solidaires du chariot (70), qui se déplace suivant la flèche Z. Le servomoteur (71), par l'intermédiaire d'un accouplement, actionne la broche filetée (72), vissée sur un écrou (73) solidaire du chariot (70).
   - Axe W (horizontal et parallèle à l'axe Z) dont la base est le chariot (51) de l'axe X. Ce chariot, dans sa partie supérieure, maintient les rails (55) fixes, rails sur lesquels glissent les patins-roulements linéaires (56) solidaires du chariot-colonne (57), qui se déplace suivant la flèche W. Le servomoteur (58), par l'intermédiaire de l'accouplement (59), actionne la broche filetée (60), vissée sur l'écrou (61) solidaire du chariot-colonne (57).

Dans cette description, chacun des quatre axes X, Y, Z et W a un actionnement indépendant, même Z et W, bien que les déplacements de ces deux derniers soient parallèles entre eux.

Quoique les actionnements des quatre axes soient indépendants, la position relative de chaque chariot par rapport aux trois autres chariots donne pourtant lieu à certains entraînements sélectifs, opportuns pour le fonctionnement général de la machine. Lorsque le chariot de l'axe X se déplace, il entraîne les parties qui configurent les axes Y, Z et W, mais, à l'inverse, lorsque les chariots de ces trois derniers axes se déplacent, ils n'entraînent pas le chriot de l'axe X. Lorsque le chariot de l'axe W se déplace, il entraîne les parties qui configurent les axes Y et Z, mais, à l'inverse, lorsque les chariots de ces axes se déplacent, ils n'entraînent pas le chariot de l'axe W. Lorsque le chariot de l'axe Y se déplace, il entraîne les parties qui configurent l'axe Z, mais, à l'inverse, lorsque le chariot de l'axe Z se déplace, il n'entraîne pas le chariot de l'axe Y. Le déplacement du chariot de l'axe Z, qui est celui d'avance de la mèche quand elle fore, n'affecte aucun des axes X, Y et W, qui demeurent statiques tant qu'on perce avec Z. Pour une meilleure compréhension des revendications qui suivent, on appelle l'axe Z 1^{er} axe (horizontal), on appelle l'axe X 2^{e} axe (horizontal), on appelle l'axe Y 3^{e} axe (vertical) et on appelle l'axe W 4^{e} axe (horizontal). L'axe Z est celui d'avance et de pénétration de la mèche, les axes X et Y sont les deux de positionnement du module dans les coordonnées de chaque trou à forer et l'axe W est celui qui déplace le sous-ensemble avec la douille de guidage de la mèche et le tiroir-collecteur de récupération des tournures, dans l'alternative d'un perçage avec une mèche-canon.
- Sur la partie frontale extérieure du chariot (70) de l'axe Z, on trouve la poupée (74) pourvue de deux broches (75) et (75a), chacune d'entre elles étant actionnée par son moteur de broche respectif (76) et (76a) à vitesse variable avec un variateur électronique, pour adapter les tours/minutes des broches à la vitesse de coupe des mèches dans chaque cas. Chaque broche est dotée de son porte-mèche respectif (77).
- Sur la partie frontale avant du chariot (64) de l'axe Y, est fixé le sous-ensemble (78) qui porte les douilles de guidage à mèche conventionnelle. Et dans l'alternative de la mèche-canon, outre ces douilles (79), il porte de surcroît le tiroir-collecteur (80) qui récupère les tournures, et également, le conduit d'évacuation (81) - figures 1 et 2- Les douilles de guidage des mèches sont nécessaires si l'on veut garantir que la grande précision des positionnements qu'offre la machine ne soit pas gâchée par les flexions des mèches, surtout au début du perçage sur des surfaces qui ne sont pas planes, mais courbes, qui tendent à dévier les mèches au moment crucial qu'est le début. Ce sous-ensemble (78), du fait qu'il est fixé au chariot de l'axe Y, suit tous les déplacements des axes X, Y et W. En revanche, l'axe Z ne l'affecte pas, parce que, lorsque Z se déplace, le sous-ensemble demeure statique. Lorsqu'il faut que ce sous-ensemble (78) s'approche des vilebrequins, il fait avancer l'axe W. Lorsque ce sous-ensemble (78) se place dans différentes positions le long de l'axe longitudinal des vilebrequins, l'axe X se déplace. Lorsqu'il doit se situer dans différentes positions suivant la largeur des vilebrequins, l'axe Y, qui a une course courte, se déplace, car il n'en faut pas de plus grande, du fait du champ réduit des positionnements suivant la largeur des vilebrequins. Les axes W et Z ont une course plus grande et similaire entre eux, pour se rapprocher et s'éloigner des vilebrequins et, dans le cas de Z, pour assurer la pénétration de perçage. L'axe X remplit deux fonctions: l'une consiste à se positionner le long de l'axe longitudinal des vilebrequins et une autre fonction complémentaire est de profiter de cet axe X pour le changement automatique de mèches et de douilles de guidage, cette 2^{e} fonction étant celle qui fait que la course X soit allongée, plus que si seule la 1^{e} fonction intervenait.

-. Le magasin (7) à mèches -figure 2 et 3- peut comporter plusieurs versions:
   - La plus simple avec un disque (82) à 4 stations: Dans chaque station, il y a la paire d'éléments á échanger (83) et (83a) à la même distance "d" que la séparation entre les deux broches (75) et (75a) de la poupée porte-mèches. Le disque est actionné par un servomoteur (85) qui produit une rotation suivant la flèche (C), dans l'un quelconque des deux sens de rotation. Le disque est monté sur une colonne (86) fixée à la carcasse (8).
   - Lorsque le nombre des éléments à échanger est plus grand, le magasin est à chaîne, avec la forme que l'on apprécie sur la figure 3a. La paire d'éléments à échanger (83) et (83a) est à la même distance "d" que la séparation entre les deux broches de la poupée porte-mèches. Mais pour profiter au mieux du magasin, on intercale, dans cette version, d'autres paires (84) et (84a) dans les zones intermédiaires. Elles ont également la même distance "d" entre elles, mais par rapport à la paire précédente, elles sont à la moitié de la distance mentionnée "d/2". Ce magasin à chaîne est lui aussi actionné au moyen d'un servomoteur (85) en vue de la rotation-déplacement de la chaîne. De même, il est monté sur une colonne (86) fixée à la carcasse (8).

Le changement automatique a trait, simultanément, à la paire de broches porte-mèches. Ainsi, on change 2 mèches + 2 douilles de guidage. Ou seulement 2 douilles, lorsque, pendant le perçage suivant, les mêmes mèches continuent et on n'a besoin de changer que les douilles, parce qu'elles ont une géométrie différente à leur extrémité avant, pour adapter cette géométrie à la zone du vilebrequin sur laquelle elles doivent prendre appui.

Dans les deux versions de magasin, chaque logement est doté d'une pince de retenue qui accroche l'élément à retenir. Dans tous les cas, on retient la douille par sa zone de retenue et lorsque le changement comprend la mèche + la douille, la mèche est introduite jusqu'au fond de la douille.

Les séquences du changement automatique des mèches et des douilles sont les suivantes (après avoir achevé le perçage précédent):
- Z avance pour introduire les mèches jusqu'au fond dans les douilles (79).
- X se déplace jusqu'au magasin (7). Le déplacement est mis à profit pour placer dans deux logements vides du magasin les éléments à retirer des deux broches (75) et (75a). Les éléments demeurent accrochés dans les pinces.
- L'union entre chaque broche (75) et (75a) et son porte-mèches (77) se décroche à la suite de l'action d'un vérin hydraulique situé dans la partie postérieure de chaque broche.
- Recul additionnel de W. Les ensembles mèches + douilles demeurent accrochés dans le magasin (7), une fois que le sous-ensemble (78) s'est retiré.
- Le disque tourne ou la chaîne du magasin (7) se met en mouvement en présentant 2 mèches + 2 douilles ou les deux douilles (79).
- W avance.
- L'union entre chaque broche et son porte-mèche correspondant s'accroche, à la suite de l'action du vérin hydraulique.
- L'axe X se déplace vers le zone de perçage.
- Z recule jusqu'a la position de début du perçage suivant.
- Le disque tourne ou la chaîne du magasin se met en mouvement, en présentant deux logements vides pour le changement suivant.
- On indique ci-dessous la procédure ou méthode pour percer des trous de graissage dans des vilebrequins:
   - Dans la station de chargement automatique ou dans celle de chargement manuel, on place un vilebrequin dans l'outil de fixation, qui comporte les deux vérins hydrauliques en arrière pour permettre l'introduction du vilebrequin, et en les avançant, on peut effectuer la prise de références et leur fixation.
- Le plateau à plaque du dessus horizontale et axe de rotation vertical tourne jusqu'à ce qu'il place l'outil et le vilebrequin en face de la mèche perceuse, dans la position appropriée pour faire le premier trou.
- Simultanément, le dispositif annexe de l'outil fait tourner le vilebrequin autour de son axe longitudinal jusqu'à la position circonférentielle du premier trou à percer.
- Les deux axes X et Y de positionnement du module d'usinage se déplacent simultanément pour placer la broche porte-mèches sur les coordonnées appropriées au premier trou à percer.
- Le quatrième axe W du module d'usinage avance pour placer le sous-ensemble avec la douille de guidage de la mèche en contact ou à proximité du vilebrequin.
- L'axe Z de pénétration de la mèche dans le corps du vilebrequin avance en perçant le premier trou.
- L'axe Z recule, la mèche se retirant du trou percé.
- L'axe W du module recule avec sa douille de guidage.
- Les autres trous sont percés d'une façon similaire, d'abord ceux qui sont parallèles entre eux, ce qui évite certaines des séquences, dans le cas où un positionnement serait identique. On perce ensuite les trous discordants entre eux, qui nécessitent toutes les séquences.
- Au terme du cycle général des perçages, le plateau à plaque du dessus horizontale et axe à rotation verticale tourne jusqu'à la station où est déchargé le vilebrequin percé et, ensuite, le vilebrequin suivant est chargé.

La description de ces séquences a été faite en ne mentionnant qu'un vilebrequin, mais elle valable si, au lieu d'un, il y a simultanément deux vilebrequins percés ou davantage.

Aux séquences indiquées, on peut éventuellement en ajouter d'autres si le changement de mèches et/ou de douilles l'exige, au singulier ou au pluriel, suivant que l'on perce un, deux ou plus vilebrequins. Les séquences ajoutées seraient celles exigées par le système de changement automatique inclus sur la machine, comme on l'a décrit au paragraphe correspondant.

Quoique dans le titre de l'invention, il est indiqué "..... à percer des trous de graissage....", si le vilebrequin l'exige, après les perçages , on peut additionnellement chanfreiner l'entrée des trous déjà faits, en employant des outils à chanfreiner, dont le changement entre le magasin et la poupée porte-outils se fait avec le système de changement automatique inclus dans l'invention.

On constatera que, sur le plateau tournant (9), à axe de rotation vertical (11), a été monté le corps-équerre (17), qui forme un volume prismatique ayant une base horizontale à la forme irrégulière, et une surface frontale perpendiculaire à l'horizontale et, sur cette surface frontale, on dispose et on maintient le ou les vilebrequins, toujours avec son/leur axe longitudinal dans un plan horizontal.

## Revendications

1. Machine à percer des trous de graissage dans des vilebrequins, dans différentes positions sur toute la longueur et la largeur de leur axe longitudinal, avec des directions perpendiculaires et formant des angles par rapport à l'axe longitudinal mentionné des vilebrequins, qui comprend une poupée (74), avec une broche porte-mèches qui se déplace, dans son chariot (70) guidé, suivant l'axe horizontal (Z), dit 1^{er} axe, d'avance de la mèche, pour qu'elle pénètre dans le corps du vilebrequin en perçant un trou de graissage et qui, en ajoutant deux autres chariots (51, 64) guidés suivant l'axe horizontal (X), dit 2^{e} axe, et l'axe vertical (Y), dit 3^{e} axe, place la mèche sur d'autres coordonnées pour, successivement, percer d'autres trous ayant des positions diverses et, en ajoutant un autre chariot (57) guidé suivant l'axe horizontal (W), dit 4^{e} axe; un plateau tournant (9) monté sur une carcasse (8) et comportant un outil qui porte le vilebrequin; avec un dispositif (37, 40, 41, 44, 45) annexe à l'outil qui porte le vilebrequin, qu'il actionne en rotation autour de son propre axe longitudinal (2) et se caracterisant par le fait que la machine comprend:
a).- un corps-équerre (17) fixé à la plaque horizontale du dessus du plateau tournant (10) et qui comporte sur sa face frontale un outil portant le vilebrequin, le référence et le fixe, le vilebrequin avec son axe longitudinal (2) étant en permanence en position horizontale et dans un plan no-diametral au plateau tournant (9), et par le fait que
b).-le plateau tournant est pourvu d'une plaque du dessus horizontale (10) et un axe à rotation verticale (11), ayant les moyens pour le faire tourner dans le plan horizontal avec des angles prédéterminés;
c).- la poupée (74) par intermediaire du chariot (64) de l'axe vertical 25 (Y) est montée sur le chariot (57) qui se deplace suivant l'axe horizontal (W).

2. Machine à percer des trous de graissage dans des vilebrequins, selon la revendication précédente, se caractérisant par le fait que les rotations du plateau (9) à plaque horizontale du dessus et axe de rotation vertical (11), permettent de placer le vilebrequin fixé dans l'outil, avec son axe longitudinal (2) toujours dans un plan horizontal, dans différentes positions angulaires entre cet axe du vilebrequin et l'axe horizontal d'avance de la mèche, pour percer aussi bien les trous perpendiculaires (4) que ceux qui forment un angle (3) par rapport à l'axe du vilebrequin; et dans laquelle la combinaison de l'outil porte-vilebrequin (19) avec le dispositif (37, 40, 41, 44), (45) annexe permet également à ce dispositif de faire tourner le vilebrequin autour de son propre axe (2), afin d'obtenir les différentes positions des trous à percer, réparties sur la circonférence tracé par cette rotation sur l'axe du vilebrequin.

3. Machine à percer des trous de graissage dans les vilebrequins, selon la première revendication, se caractérisant par le fait que l'outil (19) qui reçoit, référence et fixe le vilebrequin (1) est configuré principalement par deux supports, un de chaque côté du vilebrequin, chacun d'entre eux comprenant son vérin hydraulique (22, 23), sa tige et (26, 27), au bout de celui-ci, son point conique de centrage (24, 25), qui est introduit dans le point conique femelle de l'extrémité correspondante du vilebrequin (1), de façon analogue à un point-contrepoint, soutenant horizontalement la ligne de l'axe longitudinal (2) du vilebrequin, le support gauche (36) avec les éléments qu'il porte étant déplaçable pour permettre d'adapter sa position aux différentes longueurs des divers vilebrequins usinables de façon souple dans la machine.

4. Machine à percer des trous de graissage dans des vilebrequins, selon la première revendication, se caractérisant par le fait qu'elle est dotée d'un premier chariot guidé, qui se déplace suivant l'axe horizontal (Z) d'avance de la mèche, d'un deuxième chariot guidé, qui se déplace suivant un axe également horizontal et perpendiculaire au précédent (X), afin de permettre les différents positionnements des trous à percer le long de l'axe longitudinal du vilebrequin, d'un troisième chariot guidé, qui se déplace suivant un axe vertical et perpendiculaire aux deux précédents (Y), afin de permettre les différents positionnements des trous à percer sur la largeur du vilebrequin, et d'un quatrième chariot guide, qui se déplace suivant un axe horizontal (W) additionnel, parallèle à celui d'avance de la mèche (Z), afin de faire avancer/reculer le sous-ensemble (78) qui porte la douille (79) qui guide la mèche, douille (79) qui est en contact et prend appui sur le vilebrequin, si l'on perce avec une mèche-canon, ou qui est située près du vilebrequin, si l'on perce avec une mèche conventionnelle, les quatre chariots (70, 51, 64, 57) guidés et la poupée (74) configurant avec la broche porte-mèches un ensemble (6) monté sur une carcasse (8), dans lequel les trois premiers axes constituent les trois coordonnées de la mèche et le quatrième axe est la coordonnée horizontale de la douille de guidage de la mèche (79), les quatre axes ayant la forme de chariots dont les patins-roulements (50) glissent sur des rails de guidage (49).

5. Machine à percer des trous de graissage dans des vilebrequins, selon la première revendication, se caractérisant par le fait que le corps-équerre (17) tourne de façon coaxiale avec le plateau tournant (9), pour que la face frontale (18) du corps-équerre , qui porte les vilebrequins (1), se place, dans sa rotation (A), en face des stations de chargement/déchargement/perçage des vilebrequins.

6. Machine à percer des trous de graissage dans des vilebrequins, selon la quatrième revendication, se caractérisant par le fait que le sous-ensemble (78) porteur de la douille qui guide la mèche (79) porte également un tiroir-collecteur (80) de récupération des tournures produites pendant le perçage, avec évacuation à travers son conduit de sortie, dans l'alternative d'un perçage avec une mèche-canon.

7. Machine à percer des trous de graissage dans des vilebrequins, selon la quatrième revendication, se caractérisant par le fait que le 4^{e} axe horizontal (W) a, lui aussi, la forme d'un chariot qui se déplace sur des glissières (55) situées au-dessus du chariot (51) du 2^{e} axe horizontal (X) , ce qu fait que le 4^{e} axe (W) est entraîné chaque fois que le 2^{e} axe (X) se déplace, n'étant pas, en revanche, affecté par les déplacements du 1^{er} axe (Z) d'avance de la mèche et du 3^{e} axe (Y); à l'inverse, le déplacement du 4^{e} axe (W) n'affecte pas le 2^{e} axe (X), mais, par contre, entraîne les 1^{er} et 3^{e} axes (Z, Y).

8. Machine à percer des trous de graissage dans des vilebrequins, selon la quatrième revendication, se caractérisant par le fait que le chariot de l'axe horizontal d'avance de la mèche (Z) se déplace sur des glissières (68) situées sur la partie frontale du chariot du 3^{e} axe (Y).

9. Machine à percer des trous de graissage dans des vilebrequins, selon la quatrième revendication, se caractérisant par le fait qu'elle est dotée d'un magasin (7) contenant des mèches multiples et leurs douilles de guidage, ayant un fonctionnement qui, synchronisé avec les déplacements suivant les trois axes horizontaux, 1^{er}, 2^{e} et 4^{e} respectivement (Z, X, W), permet d'avoir un système de changement automatique, aussi bien de la mèche que de sa douille de guidage, lorsqu'il faut changer les deux (83, 83a), ou uniquement le changement de la douille, lorsque la mèche continue pour le trou suivant à percer.

10. Machine à percer des trous de graissage dans des vilebrequins, selon la première revendication, se caractérisant par le fait que le plateau tournant (9) à plaque du dessus horizontale (10) et axe de rotation vertical (11), permet d'avoir des stations de chargement-déchargement du vilebrequin (1), selon plusieurs alternatives quant aux positions par rapport aux positions de perçage, soit à ¼ de rotation du plateau, soit à ½ de rotation, et pouvant disposer le chargement-déchargement dans l'une quelconque d'entre elles, au choix, et le chargement-déchargement manuel dans l'autre.

11. Machine à percer des trous de graissage dans des vilebrequins, selon la première revendication, se caractérisant par le fait que le plateau tournant (9) à plaque du dessus horizontale et axe de rotation vertical (11), permet, outre l'outil (19) qui reçoit, référence et fixe le vilebrequin (1), accompagné du dispositif annexe qui le fait tourner autour de son axe (2) longitudinal, à ½ de rotation du plateau, d'avoir un sous-ensemble aussi utile plus le dispositif annexe, situé sur la partie frontale opposée du corps-équerre, de telle sorte que pendant qu'on perce le vilebrequin du premier outil, on effectue simultanément sur le second, avec l'économie de temps en résultant, le chargement-déchargement de l'autre vilebrequin.

12. Machine à percer des trous de graissage sur des vilebrequins, selon la première revendication, se caractérisant par le fait que le plateau tournant (10) à plaque du dessus horizontale et axe de rotation vertical (11), permet, avec deux outils et leurs dispositifs annexes (37, 40, 41, 44, 45), de recevoir, référencer, fixer et faire tourner les vilebrequins respectifs, tous les deux situés à ½ de rotation du plateau, sur les deux parties frontales opposées du corps-équerre avec, de surcroît, un deuxième module d'usinage, avec ses quatre axes et sa poupée à broche porte-mèches et sous-ensemble porte-douilles de guidage de la mèche, ainsi que le magasin à mèches et à douilles, le tout comme dans le premier module, configurant une cellule duplex ou cellule "miroir".

13. Machine à percer des trous de graissage dans des vilebrequins, selon la première revendication, se caractérisant par le fait qu'à une certaine distance verticale de l'outil et de son dispositif annexe permettant de recevoir, référencer, fixer et faire tourner un vilebrequin (1), il y a, sur la même face frontale du corps-équerre (17), un autre sous-ensemble identique pour le deuxième vilebrequin (1a), les deux avec leurs axes longitudinaux en position horizontale (2), parallèles et à une certaine distance verticale entre eux, pour les percer simultanément, avec des dotations supplémentaires, qui comprennent:
a).- Le deuxième outil indiqué, pour recevoir, référencer et fixer le vilebrequin ajouté;
b).- Le deuxième dispositif annexe indiqué, pour faire tourner le vilebrequin ajouté, avec un axe d'actionnement vertical et duplex, qui synchronise les rotations des deux vilebrequins parallèles autour de leur axe respectif;
c).- Poupée agrandie qui reçoit une deuxième broche porte-mèches, parallèle à la première, à la même distance verticale qui existe entre les deux outils porte-vilebrequins, les deux se déplaçant sur le chariot guidé du 1^{er} axe horizontal (Z), avec une avance et pénétration simultanées des deux mèches dans les deux vilebrequins, sur lesquels les différents trous sont percés simultanément;
d).- Une deuxième douille qui guide la deuxième mèche, douille montée dans le sous-ensemble porte-douilles, qui se déplace suivant le 4^{e} axe (W) jusqu'à la position de contact ou à proximité des deux vilebrequins;
e).- Doublement des postes et des éléments dans le magasin à mèches et à douilles de guidage, avec séparation à la même distance verticale que celle qui existe entre les deux broches porte-mèches, pour qu'en synchronisant le fonctionnement du magasin, avec les déplacements suivant les trois axes horizontaux, respectivement 1^{er}, 2^{e} et 4^{e} (Z, X, W), du module d'usinage, se fasse le changement automatique des deux mèches avec leurs douilles ou seulement des deux douilles, en fonction de chaque cas.

14. Machine à percer des trous de graissage dans des vilebrequins, selon la première revendication, se caractérisant par le fait qu'à des distances verticales égales, on met plus de deux vilebrequins, situés dans leurs outils respectifs, qui les reçoivent, les référencent et les fixent, des outils montés sur la la même face frontale du corps-équerre, accompagnés de leurs dispositifs annexes correspondants, qui font tourner les vilebrequins autour de leurs axes longitudinaux disposés horizontalement et parallèles entre eux, avec des dotations supplémentaires, comme cela a été décrit dans la revendication 13, mais, à chaque chapitre, avec un nombre total égal au nombre de vilebrequins percés simultanément.

15. Une procédure pour percer des trous de graissage dans des vilebrequins, utilisée dans la machine de la troisième revendication, se composant des séquences suivantes:
a).- Dans une station de chargement automatique ou dans une de chargement manuel, on place un vilebrequin dans l'outil de fixation (19) avec deux vérins (22, 23) hydrauliques qui sont en position reculée et, au moment de les avancer, on en fait la prise de références (28) et la fixation;
b).- Le plateau à plaque du dessus horizontale (10) et axe (11) de rotation vertical, tourne pour placer l'outil (19) et le vilebrequin (1) face à la mèche de perçage, dans la position adéquate pour le premier trou;
b₁).- Simultanément, le dispositif annexe de l'outil (37, 40, 41, 44, 45) fait tourner le vilebrequin (1) autour de son axe longitudinal (2), jusqu'à la position circonférentielle du premier trou.
b₂).- Simultanément, les deux axes de positionnement le 2^{e} horizontal (X) et le 3^{e}, vertical (Y), se déplacent pour placer la broche porte-mèches (75) sur les coordonnées adéquates pour le premier trou;
c).- Le 4^{e} axe (W), qui fait avancer un sous-ensemble (78) qui porte la douille de guidage de la mèche (79) entre en action et la met en contact avec le vilebrequin ou à proximité;
d).- Le 1^{er} axe (Z) horizontal, celui d'avance de la mèche, avance et la mèche pénètre dans le corps du vilebrequin (1), en perçant le premier trou;
e).- Le 1^{er} axe (X) recule en retirant la mèche du trou qui a été percé;
f).- Le 4^{e} axe, horizontal (W), recule avec sa douille de guidage (79);
g).- On procède de façon similaire pour les trous suivants, tout d'abord ceux qui sont parallèles entre eux, ce qui évite certaines séquences inutiles et, ensuite, les trous discordants entre eux, qui exigent toutes les séquences;
h).- Au terme du cycle général des perçages, le plateau à la plaque du dessus horizontale (10) et axe de rotation vertical (11) tourne jusqu'à une station de déchargement du vilebrequin percé et après, le vilebrequin suivant est chargé.

16. Une procédure pour percer des trous de graissage dans des vilebrequins, selon la quinzième revendication, se caractérisant par le fait qu'on peut l'élargir au perçage de trous de graissage dans deux vilebrequins (1, 1a), de façon simultanée, avec les mêmes séquences que celles indiquées dans la revendication mentionnée, mais comprenant simultanément deux vilebrequins.

17. Une procédure pour percer des trous de graissage dans des vilebrequins, selon la quinzième revendication, se caractérisant par le fait qu'on peut l'élargir à des trous de graissage dans trois vilebrequins ou plus, de façon simultanée, avec les mêmes séquences que celles indiquées dans la revendication mentionnée, mais comprenant simultanément trois vilebrequins ou plus.

18. Une procédure pour percer des trous de graissage dans des vilebrequins, selon une des revendications quinze à dix-sept, se caractérisant par le fait qu'aux séquences indiquées, on peurt ajouter éventuellement d'autres séquences, si le changement de la/des mèches et/ou sa/leur douille est exigé, avec le recours au système de changement automatique (7), dont est dotée la machine dans laquelle est appliquée cette procédure ou méthode.

19. Une procédure pour percer des trous de graissage dans des vilebrequins, selon la dix-huitième revendication, se caractérisant par le fait que le changement automatique de la mèche et/ou de la douille comprend les séquences suivantes:
a).- Le 1^{er} axe horizontal (Z) avance pour introduire la mèche jusqu'à fond dans la douille (79);
b).- Le 2^{e} axe horizontal (X) se déplace jusqu'au magasin (7) à mèches et à douilles. On profite du déplacement pour placer dans un logement vide du magasin les éléments à retirer de la broche (75, 75a), soit la mèche + douille, ou seulement la douille, qui demeure accrochée à la pince du logement vide;
c).- On décroche l'union entre la broche de la poupée (75, 75a) et son porte-mèche (77);
d).- Recul additionnel du 4^{e} axe horizontal (W), pendant que ce qui a été retiré de la poupée et du porte-mèche (77) continue accroché dans le magasin (7);
e).- Le magasin (7) tourne en présentant le ou les nouveaux éléments de remplacement;
f).- Le 4^{e} axe, horizontal (W), avance;
g).- L'union entre la broche (75) et le porte-mèche (77) est accrochée;
h).- Le 2^{e} axe horizontal (X) recule jusqu'à la zone de perçage;
i).- Le 1^{er} axe horizontal (Z) recule jusqu'à la position initiale du perçage suivant;
j).- Le magasin (7) tourne en présentant un logement vide en vue du changement suivant;

20. Une procédure pour percer des trous de graissage dans deds vilebrequins, selon une des revendications quinze à dix-neuf, se caractérisant par le fait qu'en plus de percer des trous de graissage dans des vilebrequins, on peut additionnellement chanfreiner l'entrée des trous déjà faits, en employant un outil à chanfreiner, dont le changement entre le magasin (7) et la poupée porte-outil se fait avec le système de changement automatique dont est dotée la machine dans laquelle est appliquée cette procédure ou méthode.

## Patentansprüche

1. Bohrmaschine zum Bohren von rechtwinklig und zur Längsachse winklig verlaufenden und über die gesamte Länge und Breite der Längsachse von Kurbelwellen verteilten Schmierlöchem, bestehend aus einem Bohrkopf (74) mit einer Bohreraufnahmespindel, die auf einem geführten Schlitten (70) sitzt, welcher auf der als 1. Vorschubachse der Spindel bezeichneten horizontalen (Z)-Achse verfahren wird und in die Kurbelwelle zum Bohren eines Schmierlochs eindringt, sowie aus zwei weiteren geführten Schlitten 51 und 64, die auf der als 2. Achse bezeichnete horizontalen (X)-Achse bzw. in der als 3. Achse bezeichneten vertikalen (Y)-Achse verfahren werden und die jeweiligen Bohrer an anderen Koordinatenpunkten in die Kurbelwelle einführen um an verschiedenen anderen Stellen Löcher zu bohren, sowie aus einem in der als 4. Achse bezeichneten und ebenfalls auf der horizontalen (W)-Achse verfahrenen und geführten Schlitten (57), einer auf einem Untergestell (8) sitzenden drehbaren Plattform (9) mit einem die Kurbelwelle haltenden Werkzeug und einer an diesem angebrachten Vorrichtung (37, 40, 41, 44 und 45), welche die Drehbewegung um die eigene Längsachse (2) der Kurbelwelle bewirkt, einer Platte mit einem horizontalen Oberteil (10) und einer Rotationsachse (11) mit den benötigten Einrichtungen für das Ausführen von Drehbewegungen in vorgegebenen Winkeln in der horizontalen Ebene, **dadurch gekennzeichnet, daß** zu dieser Maschine
a).- ein an der horizontalen Platte des oberen Teils der drehbaren Plattform (10) sitzender Winkelkörper (7) mit einem auf dessen Vorderseite angebrachten Werkzeug gehört, das der Aufnahme der Kurbelwelle, deren Referenzierung und Befestigung dient, wodurch die Kurbelwelle in ihrer Längsache (2) permanent in der horizontalen und mit Bezug auf die drehbare Plattform (9) nicht diametralen Stellung gehalten wird, sowie ebenfalls **dadurch gekennzeichnet, daß**
b).- die drehbare Plattform mit einer Platte versehen ist, die über ein horizontales Oberteil (10) und eine vertikale Rotationsachse (11) mit den benötigten Einrichtungen für das Ausführen von Drehbewegungen in vorgegebenen Winkeln in der horizontalen Ebene verfügt,
Der Bohrkopf (74), der mit Hilfe des auf der vertikalen Achse (Y) sitzenden Schlittens (64) auf dem Schlitten (57) montiert ist, welcher auf der horizontalen Achse (W) verfahren wird.

2. Maschine zum Bohren von Schmierlöchern in Kurbelwellen nach dem vorangegangenen Anspruch, **dadurch gekennzeichnet, daß** die Drehbewegungen der Plattform (9) mit der Platte mit horizontalem Oberteil und der vertikalen Rotationsachse (11) die in ihrem Werkzeug sitzende Kurbelwelle mit ihrer Längsachse (2) permanent auf einer horizontalen Ebene und in unterschiedlichen Winkelstellungen zwischen dieser Kurbelwellenachse und der horizontalen Vorschubachse des Bohrers halten, wodurch sowohl die rechtwinklig (4) als auch die mit Bezug auf die Achse der Kurbelwelle winklig einzubringenden Bohrlöcher gebohrt werden können, sowie dadurch, daß das Zusammenspiel zwischen dem die Kurbelwelle aufnehmenden Werkzeug (19) und der daran angebrachten Vorrichtung (37, 40, 41, 44, 45) eine Drehung der Kurbelwelle um ihre eigene Achse (2) möglich macht zu dem Zweck, die auf dem durch diese Rotation um die Achse der Kurbelwelle beschriebenen Perimeter liegenden Positionen der zu bohrenden Schmierlöcher anfahren zu können.

3. Maschine zum Bohren von Schmierlöchern in Kurbelwellen nach dem ersten Anspruch, **dadurch gekennzeichnet, daß** das die Kurbelwelle aufnehmende, referenzierende und auf Position haltende (1) Werkzeug (19) hauptsächlich aus zwei Halterungen besteht, davon je eine an einem Ende der Kurbelwelle, von denen jeder über einen hydraulischen Heber (22, 23) und eine Stange (26 und 27) mit konischen Zentrierenden (24 und 25) verfügt, die in die entsprechenden konischen weiblichen Aufnahmen der Kurbelwellenenden (1) analog von Reitstock und Reitstockspitzen eingreifen und damit die Kurbelwelle horizontal in ihrer Längsrichtung (2) halten, wobei die linke Halterung (36) mit Hilfe von entsprechenden Vorrichtungen so verfahren werden kann, daß sie ihre Position auf der Maschine flexibel auf die unterschiedlichen Längen der zu bearbeiteten Kurbelwellen ausrichten kann.

4. Maschine zum Bohren von Schmierlöchern in Kurbelwellen nach dem ersten Anspruch, **dadurch gekennzeichnet, daß** sie über einen ersten geführten Schlitten verfügt, der auf der (Z)-Achse des Bohrervorschubs verfahren wird, und einem zweiten geführten Schlitten, der ebenfalls auf der horizontalen Achse und zu dieser senkrecht auf der (X)-Achse verfahren wird, um damit die verschiedenen, auf der gesamten Länge der Längsachse der Kurbelwelle für das Bohren der Bohrlöcher anzufahrenden Positionen erreichen zu können, und einem dritten geführten Schlitten, der auf der vertikalen und zu den beiden oben genannten Achsen (Y) senkrecht verlaufenden Achse zum Anfahren der unterschiedlichen Positionen zum Bohren der Löcher auf der Breite der Kurbelwelle verfahren wird, und schließlich einem vierten geführten Schlitten, der auf einer zusätzlichen horizontalen (W)-Achse parallel zum Vorlauf des Bohrers (Z) verfahren wird und dazu dient, den die den Bohrer haltende Buchse (79) aufnehmenden Zusammenbau (78) vor und zurückzufahren. Die hier angesprochene Buchse (79) steht in Kontakt und stützt sich auf die Kurbelwelle wenn mit Bohrern mit nur einer Schneidlippe gearbeitet wird bzw. kommt in die unmittelbare Nähe derselben wenn mit konventionellen Bohrern gearbeitet wird. Die oben angesprochenen vier geführten Schlitten (70, 51, 64 und 57) und der Bohrkopf (74) zusammen mit der Bohreraufnahmespindel bilden dabei eine auf einem Unterbau (8) aufgebaute Einheit (6), bei der die ersten drei Achsen die drei Koordinaten des Bohrers und die 4. Achse die horizontale Koordinate der Führungsbuchse des Bohrers (79) darstellen, wobei die vier Achsen die Form von Schlitten haben, deren Kufen und Kugellager (50) auf Führungsschienen (49) geführt werden.

5. Maschine zum Bohren von Schmierlöchern in Kurbelwellen nach dem ersten Anspruch, **dadurch gekennzeichnet, daß** der Winkelkörper (17) zusammen mit der drehbaren Plattform (9) koaxial gedreht werden kann zu dem Zweck, daß die die Kurbelwellen (1) tragende Vorderseite (18) des Winkelkörpers in ihrer Drehung (A) so ausgerichtet werden kann, daß sie gegenüber den Lade-/Entlade-/Bohrstellen der Kurbelwellen zu stehen kommt.

6. Maschine zum Bohren von Schmierlöchern in Kurbelwellen nach dem vierten Anspruch, **dadurch gekennzeichnet, daß** der Zusammenbau (78), mit dem die den Bohrer (79) führende Buchse gehalten wird, als Alternative zum Bohren mit Bohrern mit einer einzigen Bohrlippe zusätzlich mit einer Schublade (80) für das Auffangen der während der Bohrvorgänge anfallenden Bohrspäne ausgerüstet ist, wobei diese Vorrichtung gleichzeitig über eine entsprechende Führung für das Abführen dieser Späne verfügt.

7. Maschine zum Bohren von Schmierlöchern in Kurbelwellen nach dem vierten Anspruch, **dadurch gekennzeichnet, daß** die 4. Längsachse (W) ebenfalls die Form eines Schlittens hat, welcher sich auf Schienen (55) bewegt, die auf dem Schlitten (51) der 2. Horizontalachse (X) sitzen, woraus sich ergibt, daß die 4. Achse (W) bei jedem Verfahren der 2. Achse mitgenommen wird aber im Gegensatz dazu nicht von den Verfahrbewegungen der 1. (Z)-Achse noch der 3. (Y)-Achse des Bohrervorlaufs beeinflußt wird. Umgekeht beeinflußt die Verfahrbewegung der 4. (W)-Achse nicht die 2. (X)-Achse aber schleift im Gegensatz dazu die die 1. und 3.( Z- bzw. Y)-Achse mit.

8. Maschine zum Bohren von Schmierlöchern in Kurbelwellen nach dem vierten Anspruch, **dadurch gekennzeichnet, daß** der Schlitten der horizontalen Vorlaufachse des Bohrers, d.h. der 1. (Z)-Achse auf Schienen (68) verfahren wird, die auf der Vorderseite des Schlittens der 3. (Y)-Achse sitzen.

9. Maschine zum Bohren von Schmierlöchern in Kurbelwellen nach dem vierten Anspruch, **dadurch gekennzeichnet, daß** sie mit einem Magazin (7) ausgestattet ist, das mehrfache Bohrer und deren entsprechenden Buchsen enthält und die Aufgabe hat, synchron zu den Verfahrbewegungen auf den drei horizontalen Achsen 1, 2 und 4 (Z, X, W) ein automatisches Wechselsystem sowohl für den Schraubeinsatz als auch für die Führungsbuchse in dem Moment zur Verfügung zu stellen, in dem die Einsätze (83 und 83a) oder auch nur die Buchse auszuwechseln sind, sollte der Bohrer für das nächste zu bohrende Loch weiter benutzt werden.

10. Maschine zum Bohren von Schmierlöchern in Kurbelwellen nach dem ersten Anspruch, **dadurch gekennzeichnet, daß** die drehbare Plattform (9) mit der Platte mit horizontalem Oberteil (10) und der vertikalen Rotationsachse (11) über Lade- und Entladestationen für die Kurbelwelle (1) verfügen kann, wobei hinsichtlich der Positionierung der Bohrlöcher unterschiedliche Alternativen vorgesehen sind, sei es auf einer 1/4 oder auf einer 1/2 Drehung der Plattform, wobei in dem Fall das Beschicken/Entladen wahlweise auf jeder dieser Positionen stattfinden kann, sei es durch manuelles Beschicken/Entladen auf der anderen Position.

11. Maschine zum Bohren von Schmierlöchern in Kurbelwellen nach dem ersten Anspruch, **dadurch gekennzeichnet, daß** die drehbare Plattform (9) mit der Platte mit horizontalem Oberteil (10) und der vertikalen Rotationsachse (11) zusätzlich zu dem die Kurbelwelle (1) aufnehmenden, referenzierenden und in Position haltenden Werkzeug (19) und der daran sitzenden Vorrichtung für die Drehung der Kurbelwelle um ihre Längsachse (2) auf 1/2 Drehung der Plattform mit einem Werkzeug und einer frontseitig gegenüber dem Winkelkörper daran sitzenden Vorrichtung ausgestattet ist, mit dem es möglich gemacht wird, daß bei jedem Bohrvorgang der Kurbelwelle des ersten Werkzeugs gleichzeitig ein zweiter Bohrvorgang des zweiten Werkzeugs abläuft, womit bezüglich des Beschickens und der Entladung eine beträchtliche Zeitersparnis bewirkt wird.

12. Maschine zum Bohren von Schmierlöchern in Kurbelwellen nach dem ersten Anspruch, **dadurch gekennzeichnet, daß** die drehbare Plattform (9) mit der Platte mit horizontalem Oberteil (10) und der vertikalen Rotationsachse (11) mit Hilfe von zwei Werkzeugen und deren entsprechenden Vorrichtungen (37, 40, 41, 44, und 45) in die Lage versetzt wird, die jeweils entsprechenden Kurbelwellen aufzunehmen, zu referenzieren und auf Position zu halten, wobei die beiden Werkzeuge auf der 1/2 Drehung der Plattform über den beiden gegenüberliegenden Vorderseiten der Winkelkörper angebracht sind und zusätzlich über ein zweites Bearbeitungsmodul mit den dazugehörigen vier Achsen und dem Bohrkopf mit der Bohreraufnahmespindel und dem Zusammenbau und Träger der Führungsbuchsen der Bohrer verfügen und in derselben Weise wie das erste Modul mit einem Bohrer- und Buchsen-Magazin ausgestattet sind und damit eine Duplex- oder Spiegel-Zelle darstellen.

13. Maschine zum Bohren von Schmierlöchern in Kurbelwellen nach dem ersten Anspruch, **dadurch gekennzeichnet, daß** auf einem bestimmten Abstand zu dem Werkzeug und der daran angebauten Vorrichtung für die Aufnahme, das Referenzieren und das auf Position halten der Kurbelwelle (1) auf derselben Vorderseite des Winkelkörpers (17) eine zweite und identische Baugruppe für die zweite Kurbelwelle (1a) angebracht ist, dabei beide mit ihren jeweiligen Längsachsen in horizontaler Ausrichtung (2), parallel und auf einem gegebenen Abstand für simultan ablaufende Bohrvorgänge. Zusätzlich sind folgende Merkmale bzw. Ausrüstungen gegeben:
a).- Das zweite Werkzeug ist dazu geeignet, die zusätzliche Kurbelwelle aufzunehmen, zu referenzieren und auf Position zu halten.
b).- Die zweite angebaute Vorrichtung ist dazu geeignet, die zusätzliche Kurbelwelle mit einer vertikalen und zweifach wirkenden Antriebsachse zu drehen, welche die Aufgabe hat, die Drehbewegungen der parallel bearbeiteten Kurbelwellen um ihre Achse zu synchronisieren.
c).- Ein vergrößerter Bohrkopf für die Aufnahme einer zweiten Bohreraufnahmespindel, die zu der ersten parallel und auf derselben vertikalen Distanz wie die zwischen den beiden Kurbelwellenaufhahmebuchsen bestehenden angebracht ist, wobei beide auf den beiden geführten Schlitten der 1. Horizontalachse (Z) so bewegt werden, daß sie gleichzeitig vorlaufen und die beiden Bohrer in die beiden Kurbelwellen einfahren und damit gleichlaufend die verschiedenen Bohrlöcher einbringen.
d).- Eine zweite Führungsbuchse für den zweiten Bohrer, die auf der entsprechenden Baugruppe und Buchsenhalter sitzt und auf der 4. (W)-Achse bis zu ihrer Kontaktposition an den beiden Kurbelwellen bzw. in die Nähe derselben gefahren wird.
e).- Verdoppelung der Aufnahmeplätze und der im Bohrer- und Führungsbuchsen-Magazin vorhandenen Elemente mit einer vertikalen Distanz zwischen denselben, die genau der zwischen den Bohrerhaltespindeln gegeben entspricht, so daß die Funktionsweise des Magazins synchron zu den Verfahrenswegen auf den drei Achsen 1, 2 und 4 (Z, X, W) des Bearbeitungsmoduls ablaufen und das automatische Auswechseln je nach Bedarf entweder der beiden Bohrer mit ihren jeweiligen Buchsen bzw. nur der Führungsbuchsen erfolgen kann.

14. Maschine zum Bohren von Schmierlöchern in Kurbelwellen nach dem ersten Anspruch, **dadurch gekennzeichnet, daß** auf denselben vertikalen Distanzen mehr als zwei Kurbelwellen in ihren entsprechenden und diese haltenden, referenzierenden und ausrichtenden Werkzeugen eingespannt werden, wobei diese Werkzeuge zusammen mit ihren daran angebrachten Vorrichtungen zum Drehen der horizontal und parallel zueinandern ausgerichteten Kurbelwellen um ihre Längsachsen und den im Anspruch 13 beschriebenen zusätzlichen Teilen alle an der Vorderseite des Winkelkörpers angebracht sind, wobei die Zahl der jeweils vorhandenen Elemente der Anzahl von simultan gebohrten Kurbelwellen entspricht.

15. Ein Verfahren zum Bohren von Schmierlöchern in Kurbelwellen basierend auf der Maschine nach dem dritten Anspruch, bestehend aus der Ausführung der nachstehend geschriebenen Sequenzen:
a).- In einer automatischen bzw. manuellen Beladestation wird mit Hilfe von zwei hydraulischen Hebern (22, 23) eine Kurbelwelle in das Aufnahmewerkzeug (19) eingelegt, wofür die beiden Heber in der zurückgefahrenen Position stehen und im Moment des Vorfahrens derselben die Referenzierung (28) und Befestigung erfolgt;
b).- Die Plattform mit ihrer horizontalen oberen Platte (10) und rotierenden vertikalen Welle (11) führen eine Drehbewegung aus um das Werkzeug (19) und die Kurbelwelle (1) gegenüber dem Bohrer in die für die Bohrung des ersten Bohrlochs geeignete Position zu bringen;
b₁).- Gleichzeitig sorgt die zusätzliche Vorrichtung des Werkzeugs (37, 40, 41, 44, 45) für das Drehen der Kurbelwelle (1) um ihre Längsachse (2) bis zu der umfänglichen Position des zu bohrenden ersten Bohrlochs.
b₂).- Gleichzeitig werden die 2. horizontale (X) und die 3.vertikale Positionierachse (Y) verfahren, um die Bohrerhaltespindel (75) auf die dem ersten Bohrloch entsprechenden Koordinaten verfahren;
c).- Die 4. Achse (W), mit welcher die die Führungsbuchse des Bohrers (79) tragende Baugruppe (78) verfahren wird, fährt vor und bringt den Bohrer in Kontakt mit der Kurbelwelle bzw. fährt diesen in die Nähe derselben;
d).- Die 2. horizontale (Z)-Achse für das Vorfahren des Bohrers fährt vor, senkt diesen in den Körper der Kurbelwelle (1) und bohrt das erste Bohrloch;
e).- Die 1. (X)-Achse fährt zurück und den Bohrer aus dem gebohrten Bohrloch heraus;
f).- Die 4. horizontale (W)-Achse fährt zusammen mit ihrer Führungsbuchse (79) zurück;
g).- Der Arbeitsgang für die folgenden Bohrlöcher ist ähnlich, wobei zur Vermeidung überflüssiger Abläufe an erster Stelle die zueinander parallelen Bohrlöcher und erst daran anschließend die nicht zueinander parallelen Bohrlöcher bearbeitet werden, für welche alle Sequenzen gefordert sind;
h).- Am Ende des allgemeinen Zyklus für das Bohren der Bohrlöcher führen die Plattform mit ihrer horizontalen oberen Platte (10) und rotierenden vertikalen Welle (11) eine Drehbewegung bis zur Position für das Ablegen der fertig gebohrten Kurbelwelle aus und nehmen im Anschluß daran die nächste zu bearbeitende Kurbelwelle auf.

16. Ein Verfahren zum Bohren von Schmierlöchem in Kurbelwellen nach dem fünfzehnten Anspruch, **dadurch gekennzeichnet, daß** es für das gleichzeitige Bohren von Schmierlöchern in zwei Kurbelwellen (1 und 1a) erweiterbar ist, und zwar mit denselben Abläufen, wie sie in dem genannten Anspruch beschrieben sind, mit dem Unterschied, daß simultan zwei Kurbelwellen bearbeitet werden.

17. Ein Verfahren zum Bohren von Schmierlöchern in Kurbelwellen nach dem fünfzehnten Anspruch, **dadurch gekennzeichnet, daß** es für das gleichzeitige Bohren von Schmierlöchern in drei Kurbelwellen oder mehr erweiterbar ist, und zwar mit denselben Abläufen, wie sie in dem genannten Anspruch beschrieben sind, mit dem Unterschied, daß simultan drei oder mehr Kurbelwellen bearbeitet werden;

18. Ein Verfahren zum Bohren von Schmierlöchern in Kurbelwellen nach einem der Ansprüche fünfzehn bis siebzehn, **dadurch gekennzeichnet, daß** den in diesen beschriebenen Abläufen evtl. weitere Abläufe in dem Fall hinzugefügt werden können, in dem es für das Auswechselns des/der Bohrer und/oder Buchsen erforderlich ist, das auf der Maschine, auf der das Verfahren oder4 die Bearbeitungsmethode zum Einsatz kommen soll, vorhandene automatische Wechselsystem (7) einzusetzen.

19. Ein Verfahren zum Bohren von Schmierlöchern in Kurbelwellen nach dem achtzehnten Anspruch, **dadurch gekennzeichnet, daß**, der automatische Wechsel des Bohrers und/oder der Buchse die nachstehend beschriebenen Abläufe beinhaltet:
a).- Die 1. horizontale (Z)-Achse fährt vor, um den Bohrer bis zum Anschlag in die Buchse (79) einzufahren;
b).- Die 2. horizontale (X)-Achse fährt bis zu dem Magazin (7), in dem die Bohrer und Buchsen gehalten werden. Diese Verfahrbewegung wird dafür genutzt, um auf einem leeren Lagerplatz des Magazins die aus der Spindel (75 und 75a) abgezogenen Teile abzulegen, d.h. den Bohrer und die Buchse bzw. nur die Buchse, die an dem Greifer des leeren Lagerplatzes zurückgehalten wird;
c).- Die Verbindung zwischen der Spindel des Bohrkopfes (75, 75a) und dem Bohrfutter (77) wird gelöst.
d).- Zusätzliches Rückfahren der 4. horizontalen (W)-Achse während die vom Bohrkopf und vom Bohrfutter (77) abgezogenen Teile weiterhin im Magazin (7) verrastet sind;
e).- Das Magazin (7) führt eine Drehung aus und präsentiert das bzw. die Austauschteile/e;
f).- Die 4. horizontalen (W)-Achse fährt vor;
g).- Die Verbindung zwischen der Spindel (75) und dem Bohrfutter (77) ist hergestellt;
h).- Die 2. horizontale (X)-Achse fährt bis zu dem Bohrbereich zurück;
i).- Die 1. horizontale (Z)-Achse fährt bis in die Ausgangsposition für den nächsten Bohrvorgang zurück;
j).- Das Magazin (7) führt eine Drehbewegung aus und präsentiert einen leeren Lagerplatz für den nächsten stattzufindenden Werkzeugwechsel;

20. Ein Verfahren zum Bohren von Schmierlöchern in Kurbelwellen nach einem der Ansprüche fünfzehn bis neunzehn, **dadurch gekennzeichnet, daß** zusätzlich zu dem Bohren von Schmierlöchern in Kurbelwellen die Eingänge der gebohrten Bohrlöcher mit einem entsprechenden Werkzeug angefast werden können, wobei für den Wechsel dieses Werkzeugs zwischen dem Magazin (7) und dem Werkzeughalter das automatische Wechselsystem zum Einsatz kommt, mit dem die Maschine, auf der das Verfahren eingesetzt wird, ausgerüstet ist.

## Claims

1. Machine for drilling greasing holes in crankshafts, in different positions along the whole length and width of its longitudinal axis, with perpendicular directions and which form angles with respect to the aforementioned longitudinal axis of the crankshafts, which includes a headpiece (74) with a bit-holder spindle that moves, on a guided slide (70), according to the horizontal axis (Z) called 1^{st} axis, feed of the bit, for it to penetrate the body of the crankshaft, boring a greasing hole and which, by adding another two guided slides (51, 64) according to the horizontal axis (X) called 2nd axis, and the vertical axis (Y) called 3rd axis, places the bit in other coordinates to successively drill other holes, which will have different positions, and by adding another guided slide (57) according to the horizontal axis (W) called 4th axis; a rotating platform (9) mounted on a housing (8) and which includes a tool that holds the crankshaft, with a device (37, 40, 41, 44, 45), attached to the tool that holds the crankshaft, which acts by rotating around its own longitudinal axis (2), a plate with the upper horizontal part (10) and a vertical rotation axis (11), which has the means to make it rotate in the horizontal plane with preset angles and which is **characterised by** the fact that the machine includes:
a). - a bracket-body (7) secured to the horizontal plate of the upper part of the rotating platform (10) and which has a tool on the front, which holds the crankshaft, references it and secures it, the crankshaft with its longitudinal axis (2) being permanently in horizontal position and on a non-diameter plane, to the rotating platform (9) and by the fact that
b). - the rotating platform is equipped with a place with upper horizontal part (10) and a vertical rotation axis (11) which has the means to make it rotate in horizontal plane with preset angles;
the head (74) by means of the slide (64) of the vertical axis (Y) is mounted on the slide (57), which moves on the horizontal axis (W).

2. Machine for drilling greasing holes in crankshafts, according to the previous claim, which is **characterised by** the fact that the rotations of the platform (9) with plate with upper horizontal plate and vertical rotation axis (11), enable the crankshaft to be placed secured to the tool, with its longitudinal axis (2) always in a horizontal plane, in different angular positions between this axis of the crankshaft and the horizontal feed axis of the bit, to drill both perpendicular holes (4), and those that form an angle (3) with respect to the axis of the crankshaft, and where the combination of the crankshaft-holder tool (19) with attached device (37, 40, 41, 44 45) also permits this device make the crankshaft rotate around its own axis (2) in order to obtain the different positions of the holes to be drilled, distributed on the circumference traced by this rotation on the axis of the crankshaft.

3. Machine for drilling greasing holes in crankshafts, according to the first claim, which is **characterised by** the fact that the tool (19) which receives, references and secures the crankshaft (1) is mainly configured by two supports, one on each side of the crankshaft, each one of them having its hydraulic jack (22, 23), its rod and (26,27), on its ends, its tapered centring tip (24, 25) which is inserted into the female tapered point of the relative end of the crankshaft (1), in a similar way to a centre-headstock, which horizontally sustains the line of the longitudinal axis (2) of the crankshaft, the left-hand support (36) being movable with elements that it contains to be able to adapt its position to the different lengths of the different machinable crankshafts on the machine in a flexible way.

4. Machine for drilling drill greasing holes in crankshafts, according to the first claim, which is **characterised by** the fact that it is equipped with a first guided slide, which moves according to the horizontal axis (Z), feed of the bit, with a second guided slide, which also moves according to a horizontal axis and perpendicular to the previous one (X), to permit different hole positions to be drilled along the longitudinal axis of the crankshaft, with a third guided slide, which moves according to a vertical axis, perpendicular to the previous two (Y), in order to permit the different positions of the holes to be drilled on the width of the crankshaft, and with a fourth guided slide, which moves according to an additional horizontal axis (W), parallel to the feed of the bit (Z), in order to make the subassembly (78), which has the bushing (79), which guides the bit, advance/return. This bushing (79) is in contact and is supported on the crankshaft, if drilled with a single-lip bit, or which is situated near to the crankshaft, if drilled with a traditional bit, configuring the four guided slides (70, 51, 64, 57), and headpiece (74) together with the bit-holder spindle, an assembly (6) mounted on a housing (8), where the first three axes constitute the three coordinates of the bit and the 4th axis is the horizontal coordinate of the guide bushing of the bit (79), the four axes having the shape of slides, whose runners-bearings (50) move along guide rails (49).

5. Machine for drilling greasing holes in crankshafts, according to the first claim, which is **characterised by** the fact that the bracket-body (17) rotates coaxially with the rotating platform (9) so that the front side (18) of the bracket-body, which holds the crankshafts (1), is placed, during its rotation (A), opposite the loading/unloading/drilling posts of the crankshafts.

6. Machine for drilling greasing holes in crankshafts, according to the fourth crankshaft, which is **characterised by** the fact that the subassembly (78), which sustains the bushing that guides the bit (79) also has a collector box (80) to recuperate the shavings produced during the drilling process, evacuating them through the output conduct, as an alternative to drilling with a single-lip bit.

7. Machine for drilling greasing holes in crankshafts, according to the fourth claim, which is **characterised by** the fact that the 4^{th} longitudinal axis (W) also has the shape of a slide which moves on guides (55) situated on the slide (51) of the 2^{nd} horizontal axis (X), which leads to the 4^{th} axis (W) being drawn every time the 2^{nd} axis (X) moves, not, on the contrary, being affected by the movements of the 1^{st} feed axis (Z) of the bit and the 3^{rd} axis (Y), inversely, the movement of the 4^{th} axis (W) does not affect the 2^{nd} axis (X), but, on the contrary, it draws axes 1 and 3 (Z, Y).

8. Machine for drilling greasing holes in crankshafts, according to the fourth claim, which is **characterised by** the fact that the slide of the horizontal feed axis of the bit, 1^{st} axis (Z) moves on guides (68) situated on the front of the slide of the 3^{rd} axis (Y).

9. Machine for drilling greasing holes in crankshafts, according to the fourth claim, which is **characterised by** the fact that it is equipped with a store (7), which contains multiple bits and their guide bushings, operating in a synchronised fashion with the movements according to the three horizontal axes, respectively 1^{st}, 2^{nd} and 4^{th} (Z, X, W), permits having an automatic change system, both of the drill bit and of the guide bushing, when it is necessary to change the two (83, 83a) or only change the bushing, when the bit goes on to the next hole to drill.

10. Machine for drilling greasing holes in crankshafts, according to the first claim, which is **characterised by** the fact that the rotating platform (9) with plate with upper horizontal part (10) and vertical rotation axis (11), permits having loading/unloading posts for the crankshaft (1), according to several alternatives regarding the positions with respect to the drilling positions, either at ¼ rotation of the platform, or at ½ rotation, and which may have loading/unloading on any one of them, at choice, and the manual loading/unloading on the other.

11. Machine for drilling greasing holes in crankshafts, according to the first claim, which is **characterised by** the fact that the rotating platform (9) with plate with upper horizontal part and vertical rotation axis (1), permits, apart from the tool (19) that receives, references and secures the crankshaft (1), accompanied by the attached device, which makes it rotate around its longitudinal axis (2) at ½ rotation of the platform, also have a useful subassembly plus the attached device, situated on the opposite side of the bracket-body, in such a way, that whilst the crankshaft of the first tool is drilled, another crankshaft is loaded / unloading at the same time on the second, with the resulting time saving.

12. Machine for drilling greasing holes in crankshafts, according to the first claim, which is **characterised by** the fact that the rotating platform (10), with plate with upper horizontal part and vertical rotation axis (11), permits, with two tools and their attached devices (37, 40, 41, 44, 45), receiving, referencing, securing and making the respective crankshafts rotate, both situated at ½ rotation from the platform, on the two opposing sides of the bracket-body, having, in addition, a second machining module, with its four axes and its headpiece with drill-holder spindle and bit guide bushing-holder subassembly, as well as bit and bushing store, as in the first module, configuring a duplex cell or "mirror" cell.

13. Machine for drilling greasing holes in crankshafts, according to the first claim, which is **characterised by** the fact that at a certain vertical distance from the tool and from its attached device, which permits receiving, referencing crankshaft (1), securing it and making it rotate. On the same side of the bracket-body (17) there is another identical subassembly for the second crankshaft (1a), both with their longitudinal axes in horizontal position (2), parallel and at a certain vertical distance between them, to drill them at the same time, with supplementary accessories, which include:
a). - The second tool indicated, to receive, reference and secure the added crankshaft;
b). - The second attached device indicated, to make the added crankshaft rotate, with a vertical and duplex operating axis, which synchronises the rotations of both parallel crankshafts around their respective axis;
c). - Enlarged headpiece, which receives a second bit-holder spindle, parallel to the first, at the same vertical distance that exists between the two crankshaft-holder bushings, both of them moving on the guided slide of the 1^{st} horizontal axis (Z), with simultaneous feed and penetration of the two bits on the two crankshafts, on which the different holes are simultaneously drilled;
d). - A second bushing that guides the second bit, bushing mounted on the bushing-holder subassembly, which moves according to the 4th axis (W) to the contact position or in the proximities of the two crankshafts.
e). - Duplication of the positions and of the elements in the bit and guide bushing store, with separation at the same vertical distance as the one that exists between the two bit-holder spindles, so that by synchronising the operation of the store with the movements, according to the three horizontal axes respectively 1, 2 and 4 (Z, X, W) of the machining module, the two bits with their bushings or only the two bushings, depending on the case, can be automatically changed.

14. Machine for drilling greasing holes in crankshafts, according to the first claim, which is **characterised by** the fact that at equal vertical distances, more than two crankshafts are placed, which are situated in their respective tools, which receive them, reference them and secure them. These tools are mounted on the same side of the bracket-body, accompanied by their relative attached devices, which make the crankshafts rotate around their longitudinal axes placed horizontally and parallel to each other, with supplementary accessories, as described in claim 13, but, in each chapter, with a total number equal to the number of simultaneously drilled crankshafts.

15. A procedure for drilling greasing holes in crankshafts used in the machine of the third claim, which is comprised of the following sequences:
a). - On an automatic loading position or on a manual loading one, a crankshaft is placed in the fastening tool (19) with two hydraulic jacks (22, 23), which are placed further back and, when they are fed, the reference taking (28) is carried out and the securing;
b). - The platform with plate with upper horizontal part (10) and axis (11) with vertical rotation, rotates to place the tool (19) and the crankshaft (1) opposite the drill bit in the correct position for the first hole;
b₁). - Simultaneously, the attached device of the tool (37, 40, 41, 44, 45) makes the crankshaft (1) rotate around its longitudinal axis (2), to the circumferential position of the first hole.
b₂).- Simultaneously, the two positioning axes, the 2nd horizontal (X) and the 3rd vertical (Y), move to place the bit-holder spindle (75) in the correct coordinates for the first hole;
c). - The 4th axis (W), which makes the subassembly (78) advance, which has the bit guide bushing (79), enters into action and puts it into contact with the crankshaft or in the proximities;
d). - The 1st horizontal axis (Z), the bit advance one, advances and the bit penetrates the body of the crankshaft (1), drilling the first hole;
e). - The 1st axis (X) goes back withdrawing the bit from the hole that has been drilled;
f). - The 4th horizontal axis (W) goes back with its guide bushing (79);
g). - The process is similar for the following holes, in the first place those that are parallel to each other, which avoids certain useless sequences and, then, the conflicting holes, which demand all the sequences;
h). - At the end of the general drilling cycle, the platform with the plate with upper horizontal part (10) and vertical rotation axis (11) rotates to an unloading position of the drilled crankshaft and then loads the following crankshaft.

16. A procedure for drilling greasing holes in crankshafts, according to the fifteenth claim, which is **characterised by** the fact that it can be extended in order to drill greasing holes in two crankshafts (1, 1a), simultaneously with the same sequences as those indicated in the aforementioned claim, but simultaneously including two crankshafts.

17. A procedure for drilling greasing holes in crankshafts, according to the fifteenth claim, which is **characterised by** the fact that it can extended to greasing holes in three crankshafts or more, simultaneously, with the same sequences as those indicated in the aforementioned claim, but simultaneously including three crankshafts or more;

18. A procedure for drilling greasing holes in crankshafts according to one of the claims fifteen to seventeen, which is **characterised by** the fact that to the sequences indicated, other sequences can eventually be added, if the change of the bit(s) and/or its bushings is necessary, resorting to the automatic change system (7), that the machine is equipped with, where this procedure or method is applied.

19. A procedure for drilling greasing holes in crankshafts, according to the eighteenth claim, which is **characterised by** the fact that the automatic change of the bit and/or the bushing includes the following sequences:
a). - The 1st horizontal axis (z) advances to insert the bit into the bottom of the bushing (79);
b). - The 2nd horizontal axis (X) moves to the bit and bushing store (7). The movement is used to place the elements to be withdrawn from the spindle (75, 75a), that is the bit + bushing, or just the bushing, which is coupled to the clip of the empty housing, into an empty housing of the store;
c). - The connection between the spindle of the headpiece (75, 75a) and its bit-holder (77) is uncoupled.
d). - Additional return of the 4th horizontal axis (W), whilst what has been withdrawn from the headpiece and from the bit-holder (77) continues coupled in the store (7);
e). - The store (7) rotates presenting the new replacement element or elements;
f). - The 4th horizontal axis (W) advances;
g). - The connection between the spindle (75) and the bit-holder (77) is uncoupled;
h). - The 2nd horizontal axis (X) returns to the drilling area;
i). - The 1st horizontal axis (Z) returns to the next initial drilling position;
j). - The store (7) rotates presenting an empty housing with a view to the next change;

20. A procedure for drilling greasing holes in crankshafts according to one of the claims fifteen to nineteen, which is **characterised by** the fact that apart from drilling greasing holes in crankshafts, in addition, the opening of holes already made can be bevelled, using a bevelling tool, which is changed between the store (7) and the headpiece with the automatic change system that the machine is equipped with, where this procedure or method is applied.
